# EUROPEAN PATENT APPLICATION

(11) **EP 2 594 386 A2**
(43) Date of publication of application: **22.05.2013**
(21) Application number: 12192736.2
(22) Date of filing: 15.11.2012
(51) Int. Cl.: B29C 65/18, B29C 65/48, B29C 65/50, A45C 3/02, A45C 7/00, A45C 3/00, A45C 5/02, A45C 11/00, B29C 53/36

(54) **Thermally welded structure for luggage case**

(30) Priority: 15.11.2011 US 201161560240 P; 03.05.2012 US 201261642090 P
(71) Applicant: Samsonite IP Holdings S.a.r.l, 1931 Luxembourg (LU)
(72) Inventor: Boldetti, Massimiliano, 21040 Castronno (IT)
(74) Representative: Lloyd, Robin

(57) **Abstract**

A thermally welded case 100, 200, 300, 400, 500, 600 is presented. In one example, a case 100 includes a plurality of layers 120, 121 thermally joined together in selected locations by a thermally activated adhesive, with the plurality of layers 120, 121 forming a laminate 132. The laminate 132 formed from the plurality of layers defines a three dimensional object having a substantial interior volume 109.

## Description

This application claims the benefit of and priority to United States provisional patent application number 61/560,240 filed on November 15, 2011 entitled "Thermally Welded Structure for Luggage Case," and also United States provisional patent application number 61/642,090 filed on May 3, 2012 entitled "Thermally Welded Structure for Luggage Case," which are both hereby incorporated by reference in their respective entireties for all purposes.

### TECHNOLOGICAL FIELD

The technological field generally relates to cases and bags such as luggage and carrying cases, and more specifically to thermally-welded cases.

### BACKGROUND

Cases and bags such as luggage and carrying cases frequently include multiple pieces of material joined together. Frequently, multiple types of materials are joined together, such as an outer material and an inner liner. Typically, the material or materials may be joined at seams using stitching. One edge of material is placed closely to another edge of material, and a machine is used to stitch the two materials together using thread. Where reinforcement members are used, they may be joined to the case or bag in several different ways. For instance, an edge bead may be positioned in the piping or hem of the border area where the materials are sewn together. The edge bead may be plastic, wire, or gathered material.

During the process of assembling the case or bag, skilled labor and bulky, expensive machinery is often required to stitch the seams. Additionally, the stitched seams may not be aesthetically pleasing and may not be very strong or flexible. In some cases, stitching may partially damage or weaken the materials being stitched (such as may be the case with elastane). The stitching may be applied non-uniformly by the person(s) or machine assembling the case or bag. Lastly, during use of the case or bag, a seam may get caught on objects and cause the stitching to unravel or tear. Stitching pockets or other components to or in a case or bag, including reinforcement members, frequently involves the same types of problems.

Documents that may be related to the present disclosure in that they include various approaches to case construction include EP 1,624,766, GB 1,216,516, WO 2011/106085, WO 2011/095955, US 3,618,477, US 3,154,125, US 2,494,905, and US 2,298,522. These proposals, however, may be improved.

It is therefore desirable to provide thermally welded cases which addresses the above described problems and/or which more generally offer improvements or an alternative to existing arrangements.

### SUMMARY

According to the present invention there is therefore provided cases or portions of cases as described in the accompanying claims.

In particular, described herein are thermally welded cases or portions of cases. In one embodiment, a case includes a plurality of layers of material thermally joined together in selected locations by thermally activated adhesive, the two or more of layers forming a laminate. The laminate formed from the two or more of layers defines a three dimensional object having a substantial interior volume.

The case may include a front wall, a rear wall, a bottom wall, and two or more end walls, and the two or more of layers may form opposing end portions separated by a middle portion. The opposing end portions may define the front, rear and end walls of the case, and the middle portion may define the bottom portion of the case. In some examples, the case may include a lid, one of the opposing end portions may define the rear wall and the lid. The end walls may each have a seam formed by corresponding free edges of the opposing end portions. The end walls may define corresponding free edges of the opposing end portions, and the opposing end portions may be thermally welded together. The two or more of layers may include an outer layer made at least in part of nylon and/or an outer layer made at least in part of leather.

The case may include an expandable pocket, with the expandable pocket advantageously formed between an outer material and an inner liner, with the two or more of layers including the outer material and the inner liner. The case may also include an elastic pocket insert coupled between the outer material and the inner liner.

In another embodiment of a case, a first portion includes inner and outer surfaces, with the first portion defined by two or more of edges. A second portion includes inner and outer surfaces and at least one flap extending therefrom. The at least one flap is folded to overlay the first portion and is at least partially thermally welded thereto to define at least a portion of an interior volume between the first and second portions.

The at least one flap may be folded over one of the two or more of edges of the first portion and at least partially thermally welded to the outer surface thereof, and/or the at least one flap may be folded over the second portion and at least partially thermally welded to the inner surface of the first portion. In some examples, the second portion may include a second flap, and the second flap may be positioned near an adjacent edge of the first portion and thermally welded to the first portion. The at least one flap and the second flap may be positioned on opposite sides of the second portion. The at least one flap may advantageously be generally rectangular in shape, generally triangular in shape, or may taper in width from a bottom portion to a top portion. In some examples, the at least one flap may define an edge, and the at least one flap may be thermally welded to the first portion adjacent the edge of the first flap. The first portion and second portion may be formed by a single sheet of material and joined together along an intersection about which the first portion is folded relative to the second portion. The first portion may include at least in part a substantially rectangular area, and the second portion may include at least in part a substantially rectangular area.

In some examples, the case may also include two reinforcement members coupled to the first or second portion along opposing lateral edges of the case, and the reinforcement member may preferably be a shock absorbing foam. The opposing lateral edges of the case may define a case bottom intersection about which the first portion is folded relative to the second portion and a portion of a top flap configured to selectively at least partially enclose the interior volume. The top flap may include a fastener to selectively attach to the first portion to hold the top flap in place. In some examples, the opposing lateral edges of the case may define enclosed sidewalls of the case. A strip of adhesive may be positioned on the outer surface of the first portion along and adjacent one lateral edge of the case, another strip of adhesive may be positioned on the inner surface of the second portion and located to connect with and extend along and adjacent the edge of the at least one flap, and the strips of adhesive may thermally weld the at least one flap of the second portion to the first portion. The first portion may define at least one tab proximate a joint between the first and second portions and configured to be folded inwardly towards the interior volume.

In another embodiment, a case includes a first panel portion with a first perforated layer of non-elastic material coupled to a first layer of elastic material by thermal welding. The case also includes a second panel portion with a second perforated layer of non-elastic material coupled to a second layer of elastic material by thermal welding. The top and bottom sides are thermally welded to form a selectively expandable interior volume.

In some examples, the second panel portion may be larger than the first panel portion. The first perforated layer of non-elastic material may be perforated along a first, a second, and a third edge of the first panel portion, and the second perforated layer of non-elastic material may be perforated along a first, a second, a third, and a fourth edge of the second panel portion. The case may selectively expand along perforated portions of the first perforated layer and the second perforated layer along the first, second, and third edges of the first panel portion and at least the first, second, and third edges of the second panel portion. The perforations are Y-shaped in some examples. The first perforated layer of non-elastic material and the second perforated layer of non-elastic material may include leather, and the first and second layers of elastic material may include elastane. In some examples, the case may be sized so as to receive a laptop computer. The perforations may define areas of selectively controlled expansion of the case. The first and second perforated layers of non-elastic material, and the first and second layers of elastic material may advantageously be thermally welded together in a single thermal welding step. In some examples, the case may further include a rim coupled along the perimeter of the case.

In another embodiment of a selectively expandable portion of a case, a non-elastic material defines at least one aperture, and an elastic material is thermally welded to the non-elastic material proximate to and extending across the aperture. The case is configured to allow expansion of the elastic material extending across the aperture upon a change in dimension of the aperture.

In some examples, the non-elastic material may be an outer material. The case may also include an inner material coupled to the non-elastic material around a perimeter, with the perimeter defining a cavity, and the inner material being advantageously coupled to the non-elastic material by thermal welding. The elastic material may allow a portion of the non-elastic material to be displaced relative to the inner material due to expansion of the elastic material. The non-elastic material may be leather, and the aperture may be U-shaped, L-shaped, or Y-shaped. The elastic material may be elastane in some examples. The case may be a business case, a laptop case, or a luggage case. The portion of the case may be a pocket of the case. In some examples, the portion may be a zone of expandability around at least some of a peripheral edge of the case.

In another embodiment, a case includes a plurality of layers of material thermally joined together by thermally activated adhesive, with the plurality layers forming a laminate. The laminate formed from the plurality of layers is formed into a three dimensional object having a substantial interior volume.

In another embodiment, an expandable pocket has a non-elastic outer material, the non-elastic outer material including a slit. The expandable pocket also has an inner material coupled to the outer material around a perimeter, the perimeter defining a cavity, and the inner material coupled to the outer material by thermal welding. An elastic material is thermally welded to the outer material proximate said slit and configured to allow a portion of the non-elastic outer material to expand relative the inner material.

In another embodiment of a case, a top side includes a perforated top layer of non-elastic material coupled to a first layer of elastic material by thermal welding. A bottom side includes a perforated bottom layer of non-elastic material coupled to a second layer of elastic material by thermal welding. The bottom side is larger than the top side, and the top and bottom sides are thermally welded to form a selectively expandable interior volume.

Another embodiment of a case includes a first portion having inner and outer surfaces, the first portion defined by a plurality of edges. The case also includes a second portion having inner and outer surfaces and a plurality of side wings extending therefrom. The side wings of the second portion are folded over respective edges of the first portion and thermally welded to the outer surface of the first portion to define at least a portion of an interior volume.

Another embodiment of a case includes a plurality of layers of material thermally joined together by thermally activated adhesive, the plurality layers forming a laminate. The laminate formed from the plurality of layers is formed into a three dimensional object having a substantial enclosed volume.

Another embodiment of an expandable pocket includes an non-elastic outer material, the non-elastic outer material including a slit. The expandable pocket also includes an inner material coupled to the outer material around a perimeter, the perimeter defining a cavity, and the inner material coupled to the outer material by thermal welding. The expandable pocket also includes an elastic material thermally welded to the outer material proximate said first slit and configured to allow a portion of the non-elastic outer material to expand relative the inner material.

Another embodiment of a laptop case includes a top side with a perforated top layer of non-elastic material coupled to a first layer of elastic material by thermal welding, and a bottom side with a perforated bottom layer of non-elastic material coupled to a second layer of elastic material by thermal welding, the bottom side being larger than the top side. The top and bottom sides are thermally welded to form a selectively expandable enclosed spaced.

This summary of the disclosure is given to aid understanding, and one of skill in the art will understand that each of the various aspects and features of the disclosure may advantageously be used separately in some instances, or in combination with other aspects and features of the disclosure in other instances.

### BRIEF DESCRIPTION OF THE DRAWINGS

The present invention will now be described by way of example only with reference to the following figures in which:

Figure 1A shows a front perspective view of an example of a thermally welded case.

Figure 1B shows a rear perspective view of the thermally welded case shown in Figure 1A.

Figure 1C shows a front perspective view of the thermally welded case shown in Figure 1A, with the top flap open.

Figure 2 shows an exploded view of layers of material and adhesive used to form the thermally welded case shown in Figures 1A through 1C.

Figure 2A shows an exploded view of some of the layers of material and adhesive from Figure 2.

Figure 3 shows a laminate formed by thermally welding together the layers of materials shown in Figure 2.

Figure 4 shows a section, taken along line 4-4 of Figure 3, of the layers of material and adhesive that form the pocket portion of the laminate.

Figures 5A through 5D illustrate one example of thermally welding together the layers of material in Figure 4 with the adhesive.

Figures 6A through 6D illustrate another example of thermally welding together the layers of material in Figure 4 with the adhesive.

Figures 7A through 7G illustrate another example of thermally welding together the layers of material in Figure 4 with the adhesive

Figure 8 shows a section, taken along line 8-8 of Figure 3, of portions of the laminate.

Figure 9 shows how the laminate of Figure 3 may be folded during the formation of the thermally welded case shown in Figures 1A through 1C.

Figure 10A shows a front perspective view of the thermally welded case shown in Figure 1A.

Figure 10B shows a section, taken along line 10B-10B of Figure 10A, of a pocket portion of the case shown in Figure 10A.

Figure 11A shows a front perspective view of the thermally welded case shown in Figure 1A, with an object in one of its pockets.

Figure 11B shows a section, taken along line 11B-11B of Figure 11A, of a pocket portion of the case shown in Figure 11A.

Figure 12 shows an exploded view of layers of material used to form another example of a thermally welded case.

Figure 12A shows an exploded view of some of the layers of material and adhesive from Figure 12.

Figure 12B shows an exploded view of some of the layers of material and adhesive from Figure 12.

Figure 12C shows an exploded view of some of the layers of material and adhesive from Figure 12.

Figure 13 shows a laminate formed by thermally welding together the layers of material shown in Figure 12.

Figure 14 shows a section, taken along line 14-14 of Figure 13, of a pocket portion of the case shown in Figure 13.

Figure 15 illustrates one example of thermally welding together the layers of material in Figure 14 with the adhesive.

Figure 16A shows a front perspective view of a thermally welded case.

Figure 16B shows a section, taken along line 16B-16B of Figure 16A, of a pocket portion of the case shown in Figure 16A.

Figure 17A shows a front perspective view of the thermally welded case shown in Figure 16A, with an object in one of its pockets.

Figure 17B shows a section, taken along line 17B-17B of Figure 17A, of a pocket portion of the case shown in Figure 17A.

Figure 18 shows an exploded view of layers of material used to form another example of a thermally welded case.

Figure 19 shows an exploded view of some of the layers of material and adhesive from Figure 18.

Figure 20 shows a first intermediate laminate formed by thermally welding together the layers of material shown in Figure 19.

Figure 21 shows some materials and components that may be thermally welded to the first intermediate laminate shown in Figure 20.

Figure 22 shows a second intermediate laminate formed by thermally welding together the first intermediate laminate and the materials and components shown in Figure 21.

Figure 23 shows some materials and components that may be thermally welded to the second intermediate laminate shown in Figure 22.

Figure 24 shows a final laminate formed by thermally welding together the second intermediate laminate and materials and components shown in Figure 23.

Figure 25 shows a section, taken along line 25-25 of Figure 24, of a pocket portion of the case shown in Figure 24.

Figure 26 shows one example of thermally welding together the layers of material in Figure 25 with the adhesive.

Figure 27A shows a section, taken along line 27-27 of Figure 24, of reinforcement members of the case shown in Figure 24.

Figure 27B shows a section, taken along line 27-27 of Figure 24, of reinforcement members of the case shown in Figure 24.

Figure 28A shows a front perspective view of a thermally welded case formed form the final laminate shown in Figure 24.

Figure 28B shows a section, taken along line 28B-28B of Figure 28A, of a pocket portion of the case shown in Figure 28A.

Figure 29A shows a front perspective view of a thermally welded case formed from the final laminate shown in Figure 24, with an object in one of its pockets.

Figure 29B shows a section, taken along line 29B-29B of Figure 29A, of a pocket portion of the case shown in Figure 29A.

Figure 30 shows a front perspective view of another example of a thermally welded case.

Figure 31 shows an exploded view of layers of material used to form the thermally welded case shown in Figure 30.

Figure 32 shows a laminate formed by thermally welding together the layers of materials shown in Figure 31.

Figure 33 shows a front perspective view of the thermally welded case shown in Figure 30, with the case empty.

Figure 33A shows a close-up view of some of the perforations on the (empty) thermally welded case shown in Figure 33.

Figure 34 shows a front perspective view of the thermally welded case shown in Figure 30, with the case full.

Figure 34A shows a close-up view of some of the perforations on the (full) thermally welded case shown in Figure 34.

Figure 35 shows a front perspective view of another example of a thermally welded case.

Figure 36 shows an exploded view of components and materials used to form the thermally welded case shown in Figure 35.

Figure 37 shows a laminate formed by thermally welding together the components and materials shown in Figure 36.

Figure 38A shows a section, taken along line 38-38 of Figure 37, of reinforcement members and a magnet.

Figure 38B shows a section, taken along line 38-38 of Figure 37, of reinforcement members and a magnet.

Figure 39 shows another side of the laminate shown in Figure 37.

Figure 40 shows a first step of forming the thermally welded case shown in Figure 35 using the laminate of Figures 37 and 39.

Figure 41 shows a second step of forming the thermally welded case shown in Figure 35 using the laminate of Figures 37 and 39.

Figure 42 shows a third step of forming the thermally welded case shown in Figure 35 using the laminate of Figures 37 and 39.

Figure 43 shows a front perspective view of another example of a thermally welded case.

Figure 44 shows an exploded view of components and materials used to form the thermally welded case shown in Figure 43.

Figure 45 shows a step of forming the thermally welded case shown in Figure 43 using the laminates formed form the components and materials shown in Figure 44.

Figure 46 shows another step of forming the thermally welded case shown in Figure 43 using the laminates shown in Figure 45.

### DETAILED DESCRIPTION

Described herein are cases and bags such as carrying cases, and more specifically, thermally welded cases formed at least partially of thermally welded structures. Although the description herein describes thermally welded structures used in business cases, it is to be understood that the disclosure is not so limited as the principles embodied herein are also applicable to other types of cases and bags, such as, for example, soft-sided luggage cases, hybrid soft-side and hard-side luggage cases, backpacks, handbags, and so forth.

A case formed using thermally welded structures as described herein may include one or more types of material, and in some examples, may include other components such as reinforcement members, elastic material for expandable portions of the case, and so forth. Elastic, as that word is used herein, includes stretchy and resilient material, such as elastane (Lycra), which may return to at least near its original shape and dimension after being stretched and then released. The material or materials and components in the case may be thermally welded together into one or more laminates, with the laminate(s) having at least two layers in some cases. The one or more laminates may then be folded and edges of the laminate(s) may be joined together by thermal welding or stitching to form a three-dimensional case that has a self-supporting substantial volume of enclosed space or interior volume.

Some thermally welded cases may include one or more pockets, one or more of which may be expandable. In other examples, at least some of the perimeter of the case may have a selectively-controlled expandable area. A case may include an expandable pocket and/or a selectively controlled expandable area. In examples with expandable pockets and/or a selectively-controlled expandable perimeter, the expandability may be provided by an elastic material, which may be thermally welded to an inner or outer material of the case.

Many different combinations, arrangements, sizes, and types of material(s) and components may be used in conjunction with the thermal welding structures described herein to form many different types of luggage, cases, bags, etc.

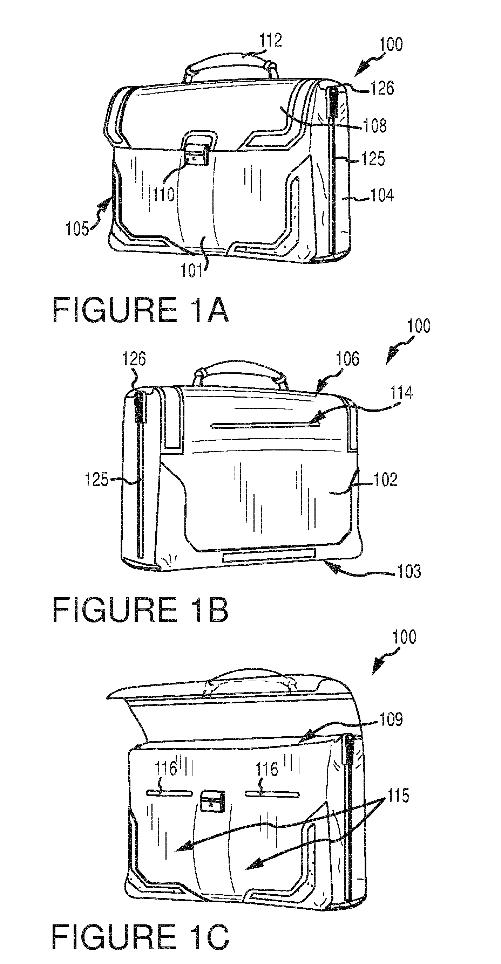

With reference to Figures 1A, 1B, and 1C, an example of a thermally welded case 100 will be described. The case 100 may be formed of a series of walls having features created using thermally-welded structures. These features may include laminate structures, seams, joints, pockets, reinforcement members, and so forth. The walls in this structure include a front side wall 101, a rear side wall 102, a bottom side wall 103, a right side wall 104, a left side wall 105, and a top side wall 106. One or more of the side walls may in some examples form a lid, cover, top flap 108, or the like. The walls 101, 102, 103, 104, 105, 106 together may define a substantial enclosed space 109 or interior volume 109. The case 100 formed using at least partially thermally welded structures stands upright on a narrow edge of the formed parallel-piped structure, in some instances without an additional internal frame structure.

The enclosed space 109 formed by the walls 101, 102, 103, 104, 105, 106 defined above may be divided into one or more compartments by dividers integrally formed with the case 100, or by dividers added in after formation of the laminate.

The top flap 108 may extend integrally from the rear side 102 of the case 100 and may form the top side 106 of the case 100. The top flap 108 may extend onto the front side 101 of the case 100 in some examples. When closed, the top flap 108 may be secured to the front side 101 of the case 100 by a securing mechanism 110, such as a latch. In other examples, however, no such securing mechanism may be used. The top flap 108 may not extend onto the front side 101 of the case 100. In general, many types of top flap 108 structures may be suitable. Also, in some examples, the case 100 may not include a top flap or top side at all, but instead may be generally open.

In those examples that do include a top flap 108, a carrying handle 112 may be coupled to the top flap 108, such as for example in the center of the top side 101 of the case 100. The carrying handle 112 may be coupled at either end to a strip of reinforcement material 113 secured to the top flap 108. The strip of reinforcement material 113 may be secured to the top flap 108 by thermally welded seams or welds. The strip of reinforcement material 113 may be positioned on the underside of the top flap 108, with either ends of the handle 112 passing through the top flap 108 to secure to the strip of reinforcement material 113. Alternatively, the strip of reinforcement material 113 may be positioned on the top surface of the top flap 108. In general, the strip of reinforcement material 113 may be coupled to the top flap 108 in many ways. Alternatively, the top flap 108 may not have any reinforcement material 113. Additionally, or in place of the carrying handle on the top flap 108, one or more other carrying handle(s) or shoulder strap(s) may be coupled to the case 100.

In general, the enclosed space 109 of the case 100 may be partitioned into separate compartments by the formation of interior pockets, dividers, files, and so forth. These compartments may be formed in the laminate structure, may be applied while the laminate structure is being formed into the final case structure, or may be added to the case after the case structure is finalized. For example, an interior pocket may be included that is adapted to receive a laptop computer, and/or a pocket may be included that is adapted to receive a tablet computer. In other examples, one or more dividers may be included in order to allow a user to separate files into different compartments. Also, one or more pockets may be included to provide for storage of various writing utensils, business cards, cellular phones, and so forth. The pockets, dividers, and so forth may, in some examples, be selectively removable, while in other examples, they may be coupled to the case in a more permanent manner, such as by stitching. In still other examples, the pockets, dividers, and so forth may be formed together with the case 100 by, for example, thermal welding. In some examples, the case 100 may include one or more floating pockets, which may be coupled to the case 100 at one point, but may have walls that do not form part of the inner or outer material of the main body of the case 100.

As described in more detail below, the case 100 may include one or more pockets 114, 115 on the exterior of the case 100 in some examples, although in other examples the case 100 may not include any exterior pockets. With reference to Figure 1B, the case 100 may include a slit type pocket 114 on the rear side 102, which may or may not be expandable. With reference to Figure 1C, the case 100 may include two expandable pockets 115 on the front side 101 of the case 100. Each expandable pocket 115 may include an access opening 116, which may be concealed when the top flap 108 is positioned over the front side 101 of the case 100. Each access opening 116 may be the access point to a respective expandable pocket 115. The case 100 may also include one or more interior pockets.

The thermally welded case 100 may be formed from multiple types of material. For example, the case may include an outer material 120 made of nylon, and an inner lining 121 also made of nylon. In other examples, the inner 121 or the outer 120 materials may be leather, polyester, canvas, elastane, or many other suitable materials. In some examples, a combination of materials may be used for one or both the outer material 120 or the inner lining 121, such as a composite. In other examples, however, the case 100 may not include an inner lining 121, such that the internal features formed by the construction of the outer material 120 and any inner laminate would be exposed in the interior 109 of the case. In some examples, the case 100 may include one or more portions of elastic material, which may allow for selectively controlled expansion of one or more parts of the case 100.

In some examples, the case 100 may be a lightweight carrying case, such as a folio, used to carry papers. Also, in some examples, one or more wheels and/or a telescoping handle may be coupled to the case 100 in order to facilitate transporting heavier items in the case (not shown in Figures 1A - 1C).

In some examples, the case 100 may include one or more reinforcement members 122. Some of the reinforcement members 122 may be internal, and may be positioned and secured between one or more layers 120, 121 of material. Such internal reinforcement members 122 may be, for example, composite sheet material, polypropylene board(s), wire(s), fiberglass, etc., and may be positioned so as to not be detectable in the external shape of the case 100. They may also be positioned such that the profile of such reinforcement members 122 may be seen in the external shape of the case 100, and thus may create desired aesthetic features as well as structural benefits.

With reference to Figure 1A, the case 100 may include an outer layer 120 formed from nylon, and may include structural members 124 such as pieces of leather 124 on the bottom left and right corners of the front side 101 of the case 100 (which may form a part of one or more expandable pockets 115). Also, as explained below, the front side 101 of the case 100 may include a T-shaped reinforcement member 122a sandwiched and secured between the outer layer 120 and an inner liner 121 (not visible in Figure 1A). Also, the top flap 108 may include structural members 124 such as pieces of leather 124. For example, the top flap 108 may include pieces of leather 124 around the left and right edges of the top flap 108, and beneath the leather or other outer material 120, strips of reinforcement members 122d may provide support in selected portions of the top flap 108. In general, many types of reinforcement members 122 may be included in many portions of the case 100. The reinforcement member 122d may be relatively thin and somewhat resiliently flexible to provide a relatively flat profile when sandwiched within (or on the top or bottom layers of) the laminate. The above examples and illustrations in the figures are given by way of example only.

In addition to or in place of the internal reinforcement members 122, the carrying case may include external reinforcement members, such as support bar 125 and/or clip 126 on the side seam or seams of the case 100, one example of which is illustrated in Figure 1B. Also, many other external reinforcement members may be used, including semi-rigid pieces of material, such as leather 124.

In other examples, however, the case 100 may not include external or internal reinforcement members. For example, a case 100 with an outer material 120 made of leather may be sufficiently strong and provide adequate structural support and thus may not require reinforcement members. In still other examples, the case 100 may be made of a flexible material and still not include any reinforcement members.

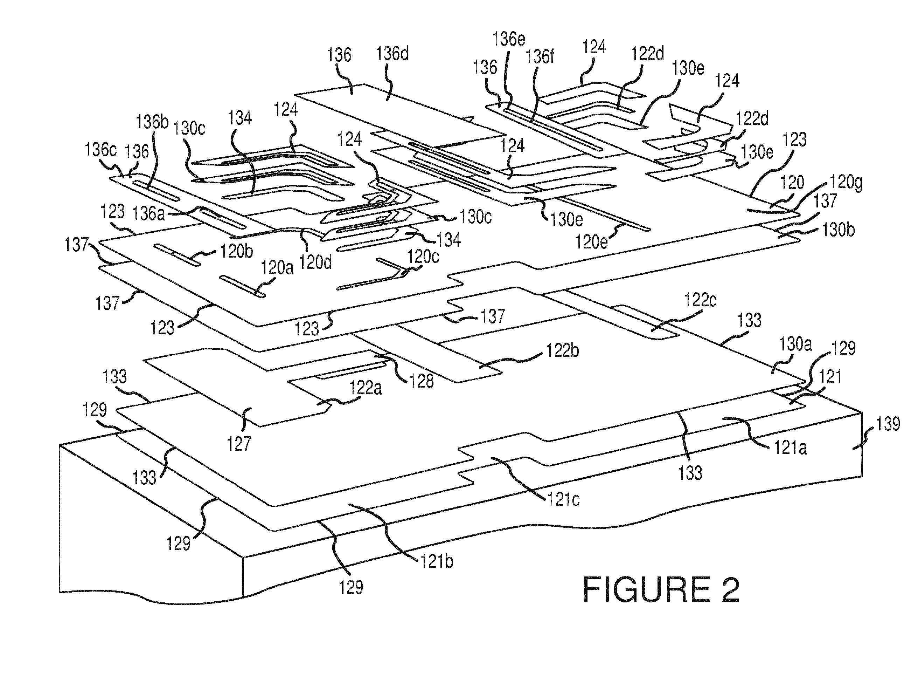

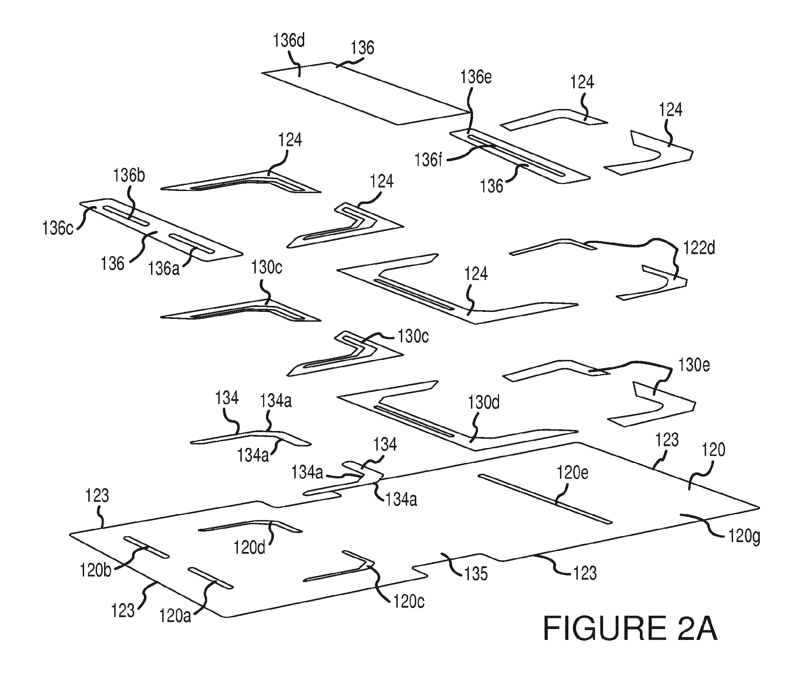

As explained below in connection with Figures 2 through 5, the case 100 may be made by a thermal welding process that may improve the manufacture, assembly, utility and appearance of the case 100. The improved assembly and manufacturing may require less human labor and/or less expensive or less complicated machinery as compared with fully stitched cases. However, in some examples, and as described below, the case 100 may include a few seams that are not thermally welded, and which may require human labor and/or a specialized machine to create some attachment seams (which may be formed by stitching, mechanical fasteners, and so forth) to form the finished case 100. In other examples the case 100 may not include any seams or stitching, and may be entirely thermally welded, some examples of which are described herein.

With reference now to Figures 2 and 2A, various layers of material and other components (such as reinforcement members), including adhesive material 130, are arranged in a coplanar fashion to be thermally welded into a laminate 132. The laminate 132 is subsequently formed into a case structure 100. The adhesives 130 may be selectively placed between the layers of materials and other components at areas to be thermally joined. As explained in more detail below, one or more pressing steps may be utilized to thermally join the layers of materials together.

Referring to Figure 2 in particular, many different combinations of materials and components may be arranged in the coplanar fashion in preparation for thermal welding. In Figure 2, the inner lining 121 is on the bottom of the layers shown, and the external surface of the ultimately-formed case is on the top of the layers shown. The inner lining 121 sheet is positioned on the bottom of the arrangement. The inner lining 121 sheet is generally rectangular in shape, with opposing end portions 121a, 121c separated by a middle section 121b having a narrower width defined by notches formed about midway along the longer sides of the inner lining sheet 121. The end portions 121a, 121c will form the front 101 and rear 102 side walls of the case 100, and the middle section 121b will form the bottom side wall 103. Note that the opposing end portions 121a, 121c may be of different lengths. For instance, if the top flap 108 of the case 100 is formed from the same end portion 121a as the rear wall 102, then the length of the end portion 121a will be sufficiently long to include both the rear wall 102 and the flap 108. The inner lining 121 may be nylon in some examples, or may be elastane, leather, neoprene, or another other suitable material.

A first sheet of adhesive 130a is positioned above the inner lining 121. The adhesive 130a is in sheet form, and in this example has a perimeter profile 133 similar to that of the inner lining 121. The adhesive 130a may also be in sheet form but have a shape to only be coextensive with the areas where the adhesive 130a is utilized (along areas where thermal bonding is desired). In other words, the adhesive 130a, though in sheet form, may have certain portions removed or cut-out, which sections may have been removed by a laser, knife, or other cutting tool. Alternatively, a specialized, shaped adhesive sheet 130a may be pre-made with certain portions not having any adhesive. Also, the adhesive 130a may also be applied in bead form, or be sprayed, rolled, or otherwise applied to the appropriate layer. In some examples, the adhesive 130a may include one or more portions of backing on one or both sides of the adhesive 130a, and the backing may be selectively removable to expose adhesive material 130a in desired locations for bonding. For example, an entire sheet of adhesive 130a may include a backing on both sides, and a portion of the backing may be removed from one side in order to expose and allow the corresponding portion of the adhesive 130a to be activated and bond at the location and to the layer as desired. In still other examples, a single sheet or portion of adhesive 130a may include different pre-formed areas or portions, each of which may be thermally activated under different conditions to bond with the desired material in the desired location. For example, one side of a sheet of adhesive 130a may be thermally activated at a first temperature, and the other side of the sheet of adhesive 130a may be thermally activated at a second, different temperature.

One or more reinforcement members 122 may be placed above the first sheet of adhesive 130a. One reinforcement member 122a may be generally T-shaped, and may be positioned over what is the left portion of the first sheet of adhesive 130a as shown in Figure 2, with the top 127 of the T-shape 122a furthest to the left and the trunk 128 of the T-shape 122a extending to the right. As explained above, this T-shaped reinforcement member 122a may provide support to the front side wall 101 of the case 100. A second reinforcement member 122b may be generally rectangular shaped, and may be positioned over what is the middle portion 135 of the first sheet of adhesive 130a as shown in Figure 2. More specifically, the second reinforcement member 122b may be positioned over the middle section 135 of the adhesive 130a having a narrower width and defined by notches. This rectangular reinforcement member 122b may provide support to the bottom side wall 103 of the case 100. A third reinforcement member 122c may also be generally rectangular shaped, and may be positioned over what is the right portion of the adhesive 130a as shown in Figure 2, This rectangular reinforcement member 122c may provide support to the rear side wall 102 or to the top side wall 106 (e.g., the top flap 108) of the case 100. Additional reinforcement members 122 may also be used in place of or in addition to those described above. Additionally, in some cases, no reinforcement members may be used.

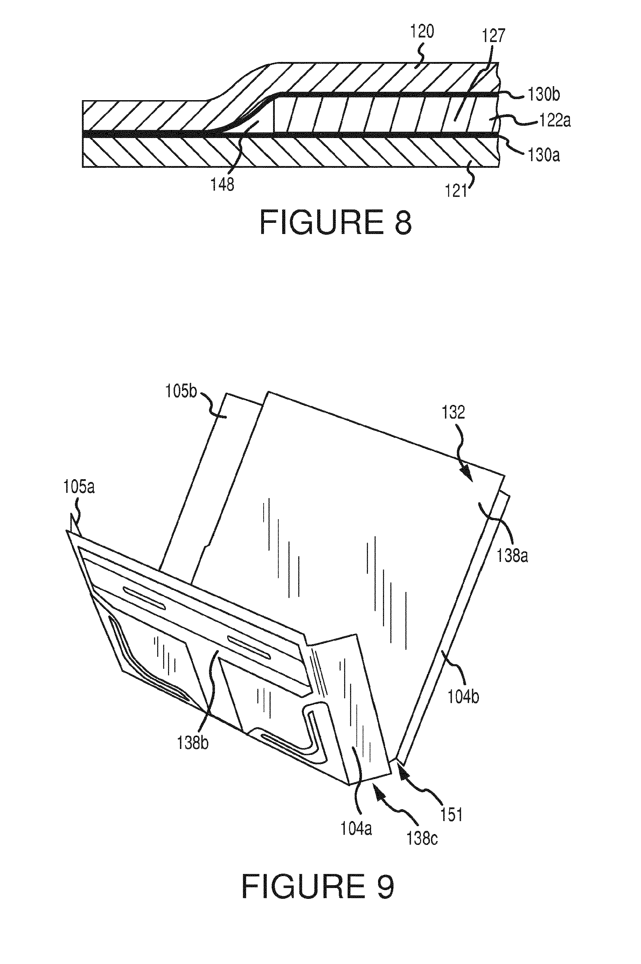

Positioning at least some of the reinforcement members 122 in between adjacent layers in a stack of layers to be thermally welded together - specifically, positioning them between the inner lining 121 and the outer material 120 - may allow for them to be embedded or sandwiched between these layers 120, 121. For example, as explained below with reference to Figure 8, the sheet or sheets of adhesive 130a, 130b, when activated, may provide a thermal seal around the respective perimeters of the reinforcement members 122 so that they generally do not move with respect to the layers 120, 121 between which they are embedded.

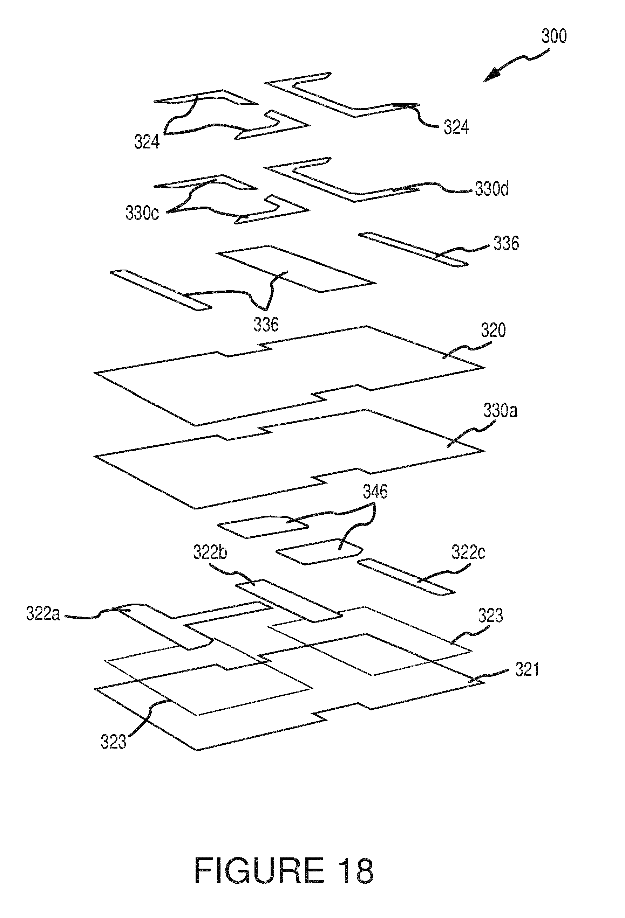

A second sheet of adhesive 130b may be placed on top of the reinforcements 122 in some but not all embodiments. The second sheet of adhesive 130b may generally have the same shape as the first sheet of adhesive 130a (e.g., may have a perimeter profile 137 that is the same shape as the inner lining 121). As with the first sheet 130a, the second sheet of adhesive 130b may have certain portions, particularly in the middle thereof, removed. In some examples, however, only a first sheet of adhesive 130a or only a second sheet of adhesive 130b may be used, as described below with reference to Figures 18 through 24.

An outer material 120 may be placed on top of the second sheet of adhesive 130b. The outer material 120 may generally have the same shape as the inner liner 121 and one or two sheets of adhesive 130a, 130b, and, as with the other layer, may have certain portions 120a, 120b, 120c, 120d, 120e removed or cut in order to form pockets or other exterior features of the case 100. The peripheral edges 123 of the outer material 120 may line up to match the peripheral edges 129 of the inner liner 121 in order to, when thermally welded together via the two sheets of adhesive 130a, 130b, have a low-profile finished look without needing to be stitched together. The different portions of the outer material 120 may correspond with various external features of the case 100 when it is finished, some of which are described below. Also, the edges 123 of the outer material 120 (e.g., the edges 123 extending from the notches to the end of each end portion) may form the side seams along opposing end walls 104, 105 of the case 100. In some cases, the outer material 120 may have one or more slots, slits, openings, apertures, or cuts 120a, 120b, 120c, 120d, 120e in order to form, for example, external pockets 114, 115 in the case 100, as explained in more detail below. The outer material 120 may be canvas, nylon, leather, or another suitable material.

On top of the outer material 120, one more additional components may be positioned that will form exterior features of the case 100. These features may be structural support features, wear resistance features, aesthetic features, pocket features (expandable or non-expandable), and so forth. For example, two L-shaped strips of elastic 134 may be positioned over two L-shaped slots 120c, 120d formed in the outer material 120 at what will become the bottom corners of the front side 101 of the case 100. The elastic material 134 is sized and shaped to overlap the marginal edges of the corner slots 120c, 120d. Over each elastic strip 134 is positioned a correspondingly-shaped sheet of adhesive 130c formed to overlap the marginal edges 134a of the elastic strip 134. Each such sheet of adhesive 130c may have a centrally formed aperture to leave uncovered the portion of the elastic strip 134 not overlapping the marginal edges of the respective corner slot 120c, 120d. Over each sheet of corner-shaped adhesive 130c is positioned an L-shaped strip of leather 124 with a center cut out to leave exposed the elastic sheet 134. The L-shaped strip of leather 124 is sized and shaped to closely match the shaped adhesive 130c so that the margins of the leather piece 124 are securely adhered to the outer material 120 to reduce the chances of having a loose edge.

Also, a U-shaped strip of adhesive 130d with a center cut-out may be positioned on what will become the bottom and bottom corners of the rear side 102 of the case 100, with a U-shaped strip of leather 124 with a center cut-out positioned on top of the U-shaped strip of adhesive 130d. The U-shaped strip of leather 124 positioned here may provide a decorative and/or a structural benefit to the case 100 in some cases.

Two L-shaped strips of adhesive 130e may be positioned over what is the right side 120g of the outer material 120 in Figure 2 (and which will become the left and right edges of the top flap 108). Two L-shaped reinforcement members 122d may be positioned over the two L-shaped strips of adhesive 130e, with the profile of the two L-shaped reinforcement members 122d generally smaller than the profile of the L-shaped strips of adhesive 130e. Also, two L-shaped pieces of material 124, such as leather, may be positioned over the L-shaped reinforcements 122d and the L-shaped adhesive 130e, with the profile of the L-shaped leather 124 or other material substantially the same as the profile of the L-shaped strips of adhesive 130e. The L-shaped corners formed by these elements may form relatively rigid and reinforced corners of the top flap 108 in order to withstand frequent lifting, access, and lowering of the top flap 108.

Also, as described in more detail below, several portions 136 of a protective or decorative film 136 (which may be self-adhering) may be positioned on one or more portions of the outer side of the case 100, such as the bottom, top, sides, corners, access areas (around the top flap 108 and opening), and so forth. It may also or alternatively be positioned over any slot, slit, aperture, or cut in the outer material 120, on what will become the bottom 103 of the case 100, and any other areas of the case 100 that may benefit from having a protective film 136 applied, such as openings to pockets 114, 115 as well as areas proximate openings in the case 100 that are likely to wear with use . One example of a protective polyurethane film 136 is OT-1 00 manufactured by Bemis Associates, Inc. In some cases 100, the film 136 may be self-adhesive (as shown in Figure 2), may have an adhesive pre-applied to it, or it may be joined to the case 100 using a different, separate strip or sheet of adhesive. Or, in some examples, an adhesive alone (as opposed to a specialized protective film) may be applied to an exterior surface of the case 100 to provide protection.

Referring to Figures 2 and 2A, one portion 136c of protective film 136 that is generally rectangular in shape and has two slots 136a, 136b in it may be positioned over two respective slots 120a, 120b in the outer material 120 that form the access openings 116 for the expandable pockets 115 on the front side 101 of the case 100. Also, a second portion 136d of protective film 136 that is generally rectangular in shape may be positioned over the middle, notched portion of the outer material 120 that will form the bottom side 103 of the case 100 when in use. Lastly, a third portion 136e of protective film 136 that is generally rectangular in shape that has a slot 136f in it may be positioned over a large slot 120e that forms the access opening for the non-expandable pocket 114 on the rear side 102 of the case 100.

The various sheets and strips of adhesive 130 mentioned above may be, for example, many types of thermoplastic or other heat and/or pressure activated adhesive. For example, the adhesive may be one of those manufactured by Bemis Associates, Inc, such as the polyurethane based Sewfree® brand of adhesive. Other urethane based, or vinyl based, or other type of adhesive may also be used. As another example, adhesives from Fait Plast may be used. In general, many types of adhesive 130 may be used, and, the sheets and strips of adhesive 130 used may vary even among the arrangement of layers used to form a single laminate 132. For example, one type of adhesive 130 may be used for the first sheet of adhesive 130a described above, and a different type of adhesive may be used for the strips of adhesive described above 130c, 130d, 130e. Also in general, the type of adhesive 130 used may depend on the materials and the thickness of the materials to be joined, as well as the temperature to which the materials may be heated without damaging or weakening them. Also, although the above has described using sheets and strips of adhesive 130, alternatively or in addition to the sheets and strips, some adhesive 130 may be pre-applied to one or more of the layers or components before being thermally welded (e.g., in a taping like manner). For example, the protective film 136 may be manufactured with an adhesive 130 pre-applied to one side of the protective film, or the inner liner 121 may be manufactured with an adhesive backing 130, and so forth.

As mentioned above, many types of reinforcement members 122 or other components may be used. For example, polypropylene, or other types of plastic sheets or boards may be used. In some examples, high-tech components, such as a GPS chip, RFID, or other type of tracking device(s) may be included. Electrical leads may be positioned in the laminate 132, and may have apertures formed therein to allow the leads to extend between laminate layers, to allow the supply of power to such devices. In still other examples, personalized or custom components may be included. For example, a manufacture may desire to include a component with a logo, or include pieces of polypropylene board shaped in the letters of the manufacturer's name so that a profile having the desired shape can be seen on the surface of the case 100. In general, almost any type of component may be included in the laminate 132 that will subsequently be formed into a case 100.

The protective films 136, where used, may help protect portions of the case 100 from water, abrasion, fading, and so forth, particularly portions of the case 100 that are subject to frequent wear and tear. In general, the protective film 136 may be one of a variety of different thicknesses, such as 76.2 microns thick in the case of OT-100. In some examples, in addition to or in place of protective film 136 layers on the outside of the case 100, one or more protective layers of film 136 may be included on inner surfaces interior to the case 100. In general, many types of protective film 136 or other protective element (such as hard plastic corners or a solid bottom sheet) may be thermally welded to the laminate 132 and/or added to the case 100 after forming the laminate 132 into the finished case 100, as described below.

As mentioned above, in some examples, the various materials, components, and/or adhesives used may have certain openings, slots, slits, apertures or cutouts (e.g., 120a, 120b, 120c, 120d, 120e, 136a, 136b, 136f, etc.) in them before being arranged in a coplanar stack 132, with the openings or cuts made, for example, by a laser, knife, and so forth. For example, the outer material 120 may include several slits120a, 120b, 120c, 120d, 120e in it that will subsequently form access openings 116 for one or more pockets 115 in the case 100. Additionally or alternatively, one or more of the sheets and/or strips of adhesive 130 may be cut (e.g., with a laser) in order to only provide adhesive to certain areas and not other areas when the arrangement 132 of materials and components is thermally welded together and the adhesive 130 is activated. For example, the adhesive corner sheets 130c, 130e noted above. In other examples, a laser or other cutting mechanism may be used to cut or alter the materials and/or components *after* they have been thermally welded together into a laminate 132.

Also, or alternatively, liners or backing material 131 may be positioned over portions of adhesive 130 that are not desired to be used during the thermal welding process, such as adhesive that is adjacent to what should be the interior walls of pockets 115. The liner or backing material 131 may help prevent such adhesive 130 from thermally welding some of the materials and/or components together. Also, or alternatively, multiple steps of thermal welding with specialized presses may be used to selectively press only certain portions of the layers of materials, an insert may be inserted into areas that are not desired to be welded together, and generally many different techniques of thermal welding may be used, some of which are described below.

The various layers of materials and components may be arranged in the coplanar fashion in some examples by a robot or a machine, and may not require much, if any, human labor. Using sheets, strips, or pre-applied adhesive 130 may improve the uniformity of the adhesive that is applied - as compared with, for example, spray-on glue, or as compared with stitching from a machine. The more uniform distribution of adhesive 130 may help eliminate subsequent weak spots in joints between various types of materials. Also, the use of, for example, sheets of adhesive 130, may allow a case 100 manufacturer to uniformly apply the adhesive 130 across an entire surface, as opposed to only one portion at a time.

The thermal welding process described below in more detail allows many different types of materials and other components to be easily and efficiently added to the case-in-progress at a relatively early stage of manufacture. Many, most, or in some cases even all of the constituent parts that will eventually be included in the case 100 may be included in one or more coplanar arrangement(s) 132 to be thermally welded into a single laminate 132 (or in some cases more than one, in which case the more than one laminate 132 may subsequently be thermally welded together). Moreover, most of these components may be prepared by a machine with the help of, for example, molds or laser cutting of materials and components, and the components can further be aligned with precision in an arrangement such as that shown in the exploded view Figure 2.

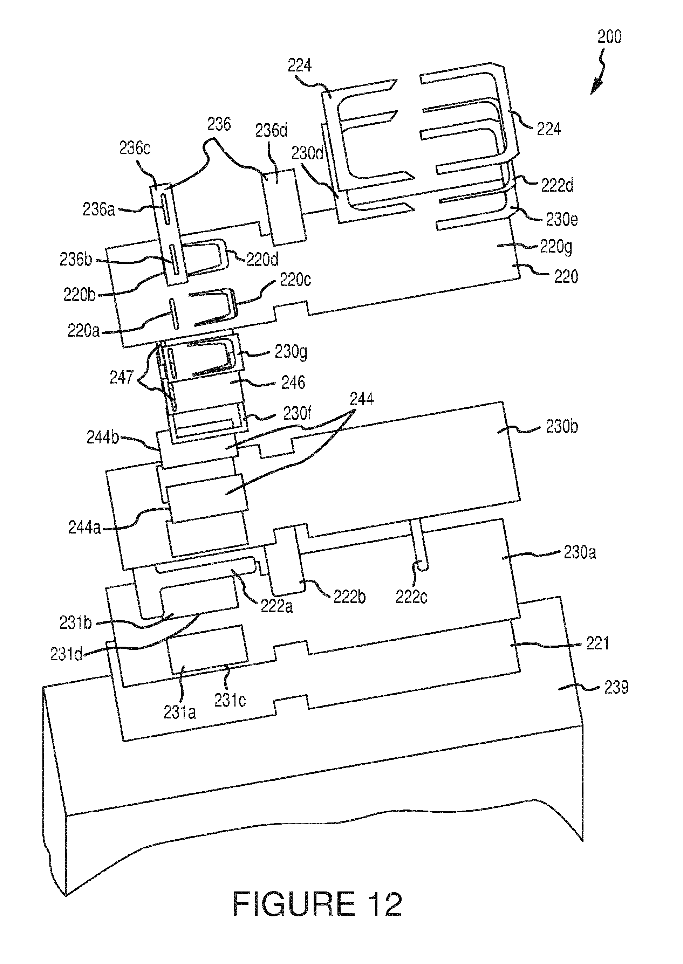

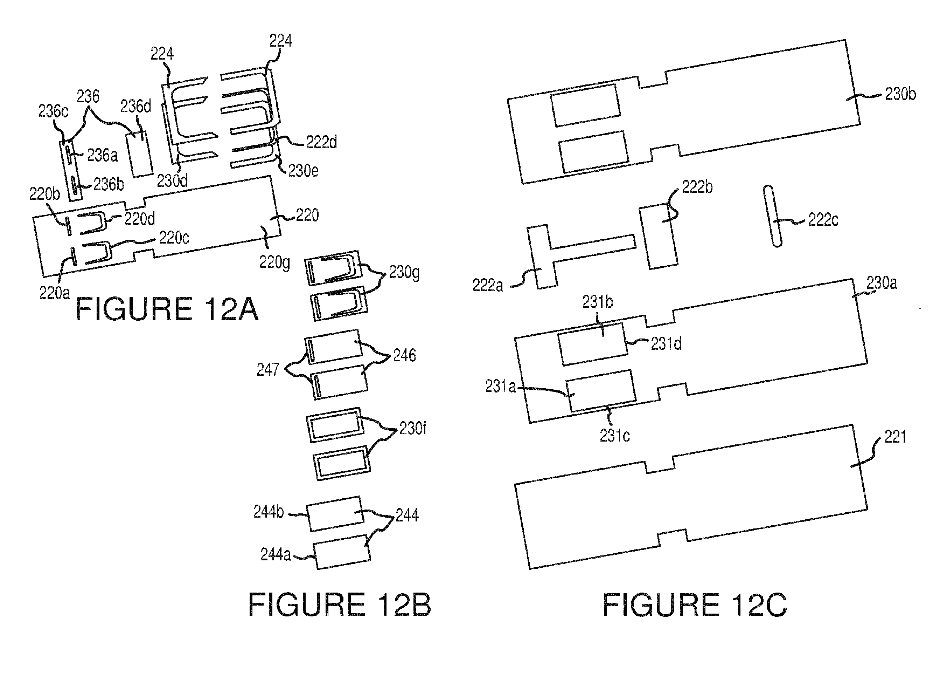

Although the above description has explained one particular set of materials and components that may be used to form a case, many other combinations of materials and components are possible and within the spirit of the present disclosure. As a few additional examples, Figures 12 through 46 describe other examples of thermally welded cases 200, 300, 400, 500, 600. In general, however, many different types of materials and components may be used to manufacture a case 100, and many other types of cases and containers are possible using this technique, such as soft-sided luggage cases, hybrid soft-side/hard-side luggage cases, formable soft-sided luggage cases, backpacks, handbags, wallets, purses, and so forth. Also, the case 100 (or other bag, luggage, etc.) may include pockets or other features different from those shown and described herein. For example, the case 100 may include pockets that have covers or flaps that have larger or smaller access openings, and so forth.

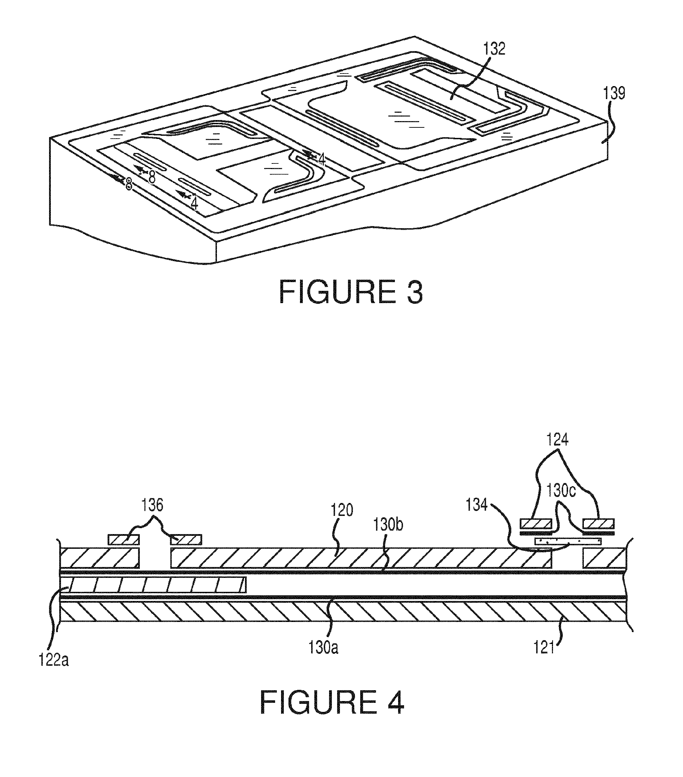

With reference now to Figures 3 through 8, the materials, components, adhesives, etc. that were positioned or arranged as shown in the exploded view of Figure 2, or otherwise, may be thermally welded together to form a laminate 132. As explained in the examples below, in some cases, a single step of thermal welding may be used, while in other cases, multiple iterations of thermal welding may be required. Each step of thermal welding may involve applying heat and/or pressure to the arrangement of materials, components, adhesives, etc. In some instances, a large (flat) press 140 may heat and/or press the entire arrangement together. In other examples, specially designed presses 140 may apply heat and/or pressure to only selected portions of the arrangement 132 (e.g., only along the profile or profiles of the specially designed press or presses), thus activating adhesive only along those selected portions. In general, many types of thermal welding processes may be used, and the temperature of the heat applied, the pressure applied, and the time that the heat and/or pressure is applied may vary depending on, for example, the type(s) and thickness(es) of material(s) or component(s) being joined, the type(s) and thickness(es) of adhesive being used, and so forth. In examples involving multiple iterations of thermal pressing, different temperatures, pressures, and times may be used in different iterations.

In general, the heat and/or pressure may be applied in order to create the laminate 132 in a variety of ways. As described above, a press 140 may be used, however, in other examples, a machine may thermally weld strips or small portions together, one strip or portion at a time, similar to a sewing or stitching machine. Also, the heat may come from one or more of several of sources, such as hot air (e.g., steam), heated metal, hot water, a laser, and so forth. The temperature of the heat applied may vary, and may be, for example, 80 to 90 degrees Celsius, or 120 to 160 degrees Celsius.

The heat and/or pressure applied may cause the adhesives 130 to melt or become "wet" and partially diffuse into the surfaces being joined, and may, in some cases, do so without damaging the material(s) or component(s). Using thermally activated adhesive 130 may allow a wider variety of materials and/or components to be used in manufacturing the case 100 as opposed to what may be used in manufacturing stitched cases. For example, the thermal welding process may allow elastic materials, or thinner materials (including thinner elastic materials) to be used in manufacturing and assembling cases 100, as opposed to cases that are mostly formed by stitching materials and components together.

Thermally welding the materials and/or components together may provide a number of advantages over stitched seams, such as the possibility of working in a single plane while assembling the materials and components together (until, of course, the laminate is folded into the three dimensional case), relatively flat surfaces at joints between materials and/or components (e.g., low profile), improved aesthetics (e.g., a more finished look), improved strength and durability, flexible or expandable joints (at least where the material and/or component is flexible or expandable), less weight, fewer components (e.g., no thread or seam covering fabric), less human labor, and so forth. In general, the thermal welding may help alleviate some of the problems encountered with stitched seams on a case.

With reference to Figures 2 through 8, in between or after all of the iterations of thermal welding, a laser or other cutting or other altering mechanism may optionally be used to cut or otherwise modify the laminate 132 formed by thermal welding. For example, portions of the laminate 132 may be cut with a laser or by other means to form pockets 114, 115 or the access openings 116 to pockets, or slits/apertures in the laminate 132, or trim edges to form particular shapes. Also, in between or after all iterations of thermal welding, the materials and/or components joined together may be cooled in order to help the thermal welds set.

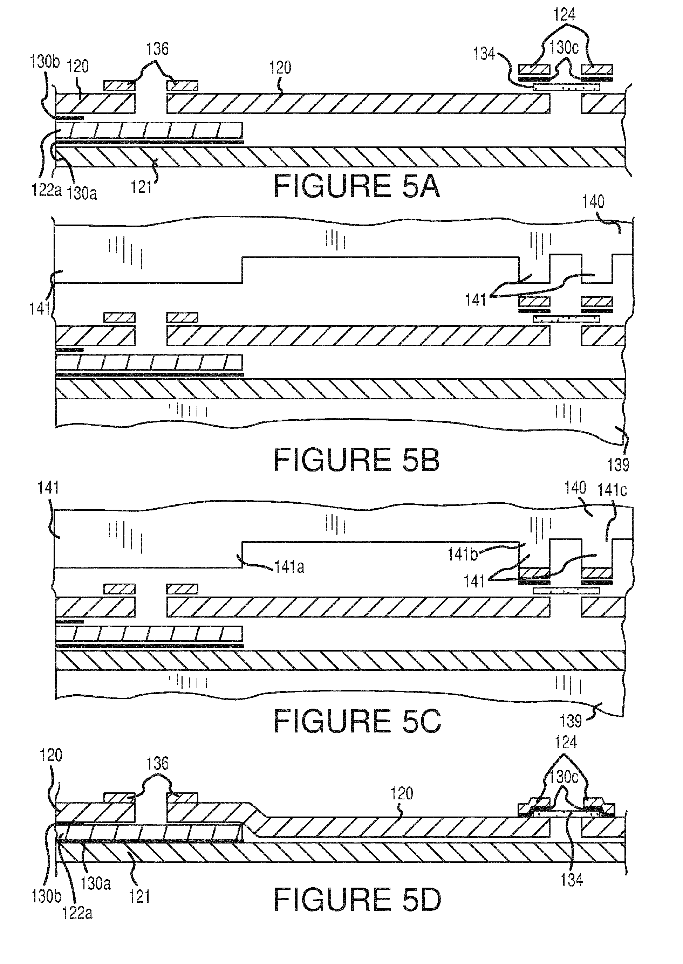

Figure 4 shows an exploded section of various layers that may be thermally welded together in one or more thermal welding iteration(s), with the section taken along line 4-4 in Figure 3. The layers may include a protective film 136, a strip of elastic 134, an outer material 120, a strip of leather 124 (or other material or even a reinforcement member), an inner liner 121, and several strips and sheets of adhesive 130a, 130b, 130c. In general, many different thermal welding techniques may be employed to thermally weld these various layers together, a few examples of which are described below with reference to Figures 5A through 7G.

Referring to Figures 5A through 5D, in some embodiments, certain portions of the first and second sheets of adhesive 130a, 130b from Figure 2 may be removed prior to positioning the sheets of adhesive 130a, 130b in the stack of layers. For example, the first sheet of adhesive 130a may have a portion removed that corresponds to the inner, rear wall of the expandable pocket 115 where there is no reinforcement member 122a, and the second sheet of adhesive 130b may have a portion removed that corresponds with the inner, front walls of the expandable pocket 115 up to a certain point above the access point of the expandable pocket 115, as shown for example in Figure 5A (not shown, however, in Figure 2). With reference to Figure 5B, the layers of material (including the cut-away sheets of adhesive 130) may be positioned between a base 139 and a specially designed press 140 that may apply heat and/or pressure to only selected portions of the arrangement. For example, the press 140 may have a main body and may also have one or more protrusions 141, with the protrusions 141 generally extending beyond the main body. The protrusions 141 may be designed to contact certain points on the stack of layers 132 to be thermally welded together. For example, referring to Figure 5B, a first protrusion 141a may generally be as wide as the reinforcement member 122a and be configured to press down on the reinforcement member 122a to secure it in place in the laminate 132. Second and third protrusions 141b, 141c may generally be as wide as the left and right sections of leather (or other outer material) strip 124.

With reference to Figure 5C, the specially designed press 140 may press the layers together by applying pressure and/or heat to activate the adhesive 130 and cause the adhesive 130 to adhere the surfaces to be joined (such as for instance diffusing into the surrounding materials). Once the thermal press is complete, the laminate 132 may be formed, and, with reference to Figure 5D, the laminate 132 may be removed from the base 139 and press 140. Still with reference to Figure 5D, the thermal pressing may have caused a portion of the first sheet of adhesive 130a to couple the first reinforcement member 122a to the inner lining 121, a portion of the second sheet of adhesive 130b to couple a portion of the outer material 120 to the reinforcement member 122a, and the strip of adhesive 130c to couple the leather 124 (or other material) to the outer material 120 while at the same time securing the strip of elastic 134 to the slit, aperture, or opening in the outer material 120 to form the expandable part of the expandable pocket 115.

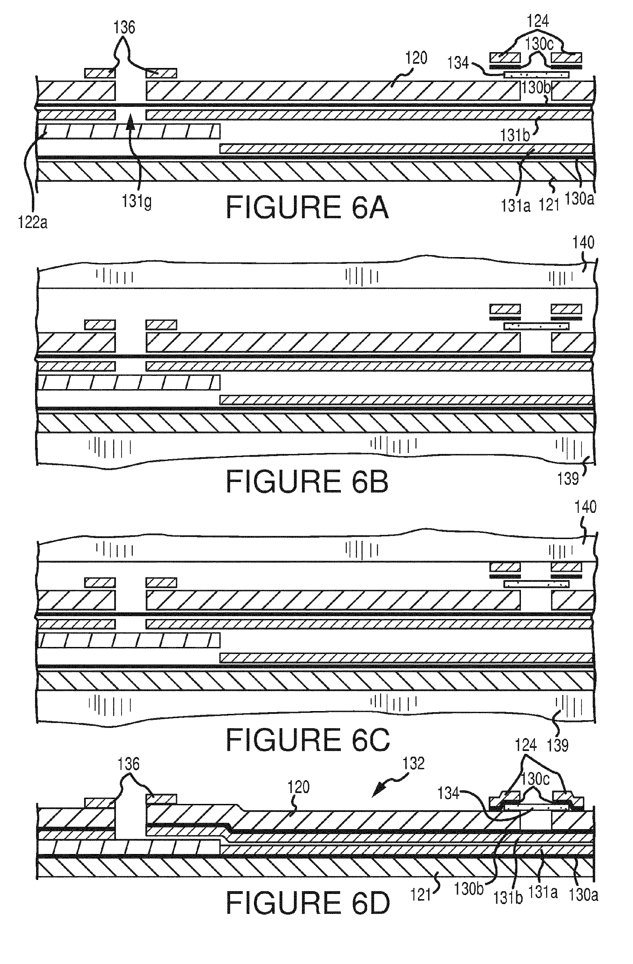

With reference now to Figures 6A through 6D in some embodiments, no portions of the first and second sheets of adhesive130a, 130b from Figure 2 may be removed prior to positioning the sheets of adhesive 130a, 130b in the stack of layers, but instead, backing sheets 131 may be added to the layers to be welded together in order to cover the unneeded adhesive (backing sheets not shown in Figure 2) and facilitate only welding the layers desired to be welded along the regions (lines of connection) to be welded, and allowing the others regions to remain un-welded. For example, a first backing sheet 131a may be positioned above the first sheet of adhesive 130a and may correspond to the inner, rear wall of the expandable pocket 115 where there is no reinforcement member 122a, and a second backing sheet 131b may be positioned just below the second sheet of adhesive 130b and above the reinforcement members, and may correspond with the inner, front walls of the expandable pocket 115. The second backing sheet 131b may have an opening 131 g that corresponds with the access opening 116 of the expandable pocket 115, as shown for example in Figure 6A.

With reference to Figure 6B, the layers of material (including the backing sheets) may be positioned between a base 139 and a substantially flat press 140 that may apply heat and/or pressure over the entire arrangement of layers of materials and/or components. The flat press 140 may not have any protrusions in some examples.

With reference to Figure 6C, the flat press 140 may press the layers together by applying pressure and/or heat to activate the adhesive 130 and cause the adhesive 130 to diffuse into the surfaces to be joined. Once the thermal press is complete, the laminate 132 may be formed, and, with reference to Figure 6D, the laminate 132 may be removed from the base 139 and press 140. Still with reference to Figure 6D, the thermal pressing may have caused a portion of the first sheet of adhesive 130a to couple the first reinforcement member 122a to the inner lining 121, and may also have caused the first sheet of adhesive 130a to couple the first backing sheet 131a to the inner lining 121. The thermal pressing may also have caused the second sheet of adhesive 130b to couple the outer material 120 to the reinforcement member 122a, and also have caused the second backing sheet 131a to be coupled to the outer material 120. The thermal pressing may also have caused the strip of adhesive 130c to couple the leather 124 (or other material) to the outer material 120 while at the same time securing the strip of elastic 134 to the slit or opening 120c, 120d in the outer material 120 to form the expandable part of the expandable pocket 115. Using a flat or substantially flat press 140 may decrease the costs associated with specially designing or molding a press 140 with protrusions 141.

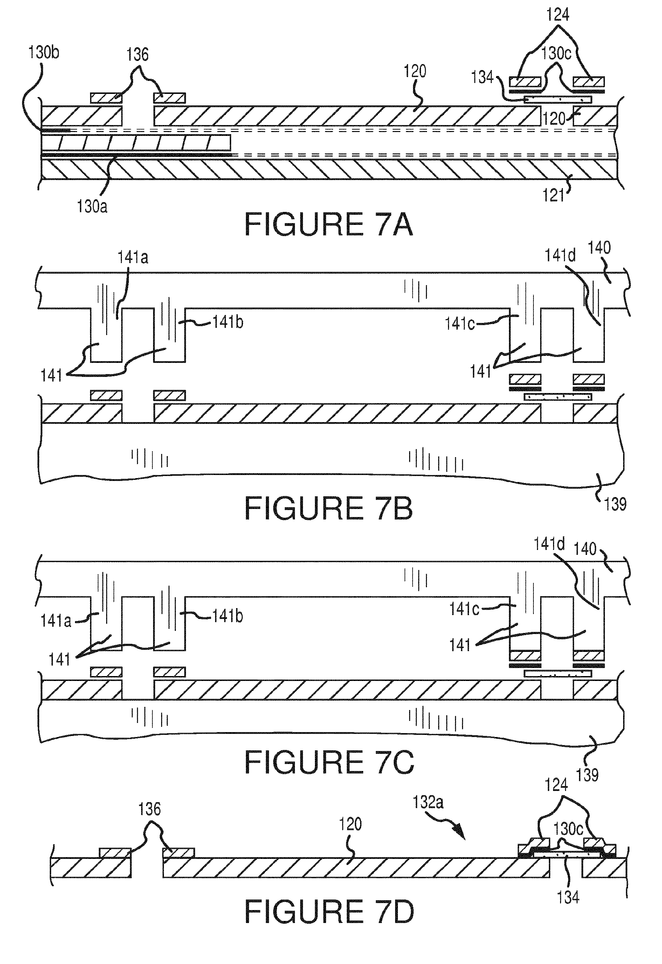

With reference to Figures 7A through 7G, as mentioned above, in some examples, multiple iterations of thermal welding may be performed. For example, some of the layers of materials may be joined in a first pressing step, and other layers (possibly including the layers that were joined in the first pressing step) may be joined in a second pressing step. Referring specifically to Figure 7A, in some cases, portions of the first and second sheets of adhesive 130a, 130b may be removed prior to thermally pressing the layers of materials together (with removed portions indicated in dashed lines), although in other embodiment, no portions may be removed prior to thermal pressing. In still other cases, portions of sheets of adhesive 130 may be added.

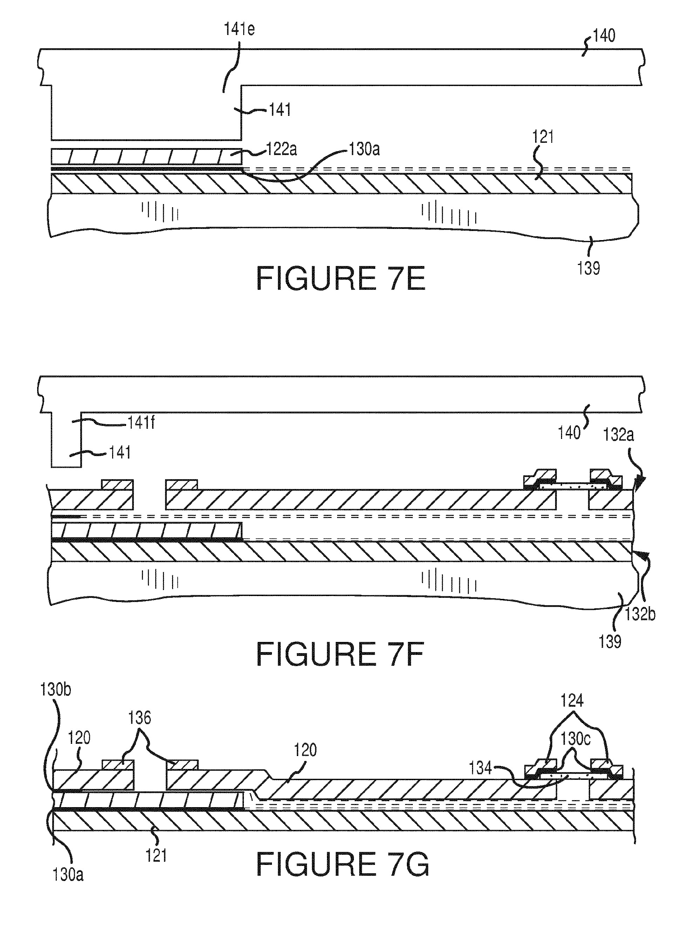

Referring now to Figures 7B through 7D, the outer material 120, the strip of elastic 134, the strip of adhesive 130c and the strip of leather 124, along with the protective film 136 may be positioned between a base 139 and a first specially designed press 140 with four narrow protrusions 141a, 141b, 141c, 141d, which may press these layers of material together to form a first laminate 132a. Referring to Figure 7E, the inner liner 121, first sheet of adhesive 130a, and the reinforcement member 122a may be positioned in between the base 139 and a second specially designed press 140, with one broad protrusion 141 e configured to thermally weld the reinforcement member 122a to the inner liner 121 to form a second laminate 132b. Referring to Figure 7F, the first and second laminates 132a, 132b may be positioned between the base 139 and a third specially designed press 140 with one protrusion 141f (in this example), which may thermally weld the first and second laminates 132a, 132b together to form a final laminate 132c, as shown in Figure 7G.

The thermal welding techniques described above are given by way of example, and many other techniques may be used, including various combinations of the above techniques. For example, although the process detailed above has described a substantially flat bottom base 139, the bottom base 139 that the layers of material and/or components 132 are laid on may also be specially designed and may in some cases have one or more protrusions formed to define perimeters or peripheries where welding should take place (not shown). Additionally, the upper press 140 may have peripheral or perimeter shaped press elements or protrusions 141 that only apply heat and pressure where a welded structure is desired. In general, many combinations of flat or specially designed base 139 and/or upper press 140 element(s) may be used. For example, a flat upper press 140 and a flat base 139 may be used in the thermal welding process described in connection with Figures 5A through 5D. Also, many combinations of removing and/or adding portions from the sheets and/or strips of adhesive 130, using backing sheets 131, and so forth, may be used to form pockets 114, 115 or other areas where no adhesive is needed. Also, one or more iterations of thermal pressing may be performed before a final laminate 132 is made. Also, note that the presses 140 and bases 139 illustrated in Figures 5A through 7G only represent a portion of the presses 140 and bases 139, specifically the portion that is involved in thermally welding the layers of material and components visible in those figures.

With reference now to Figure 8, the upper edge 127 of the first, T-shaped reinforcement member 122a may be coupled between two layers of fabric 120, 121 via the first and second sheets of adhesive 130a, 130b. The first sheet of adhesive 130a may couple the reinforcement member 122a to the inner lining 121 of the case 100, and the second sheet of adhesive 130b may couple the reinforcement member 122b to the outer material 120 of the case 100. Also, as explained above, the reinforcement member 122b may be concealed because it is embedded between the outer material 120 and the inner lining 121, which may make the reinforcement member 122a not visible, or it may cause the reinforcement member 122a to cause a protrusion in one material or the other (thus creating a semi-concealed look) and allows the outline or profile of the member 122a sandwiched in the laminate 132 to be visible. Also, the two sheets of adhesive 130a, 130b may be thermally welded to one another where there is no reinforcement member 122a between them, effectively joining the inner liner 121 and the outer material 120. The joint between the inner liner 121 and the outer material 120 may have a clean, finished look, may have a low-profile, and may not have any stitching. With reference to Figures 2 and 8, the edges of the inner liner 121 and outer material 120 may line up to create an even, combined edge.

As illustrated in Figure 8, a small gap 148 may be present in between the layers of material 120, 121 where they pass over an edge of the reinforcement member 122a and/or in between a component (e.g. reinforcement member 122a) and the material or another component. However, in some cases, such a gap 148 or gaps may not be present. In general, such gaps 148 may or may not be present at points where material(s) and/or component(s) are being thermally welded together. Whether such gaps 148 are present may depend, for example, on the particular adhesive and material(s) and/or component(s) involved, on the pressure and temperature used in the thermal welding process, and so forth. Also, whether such gaps 148 are present may depend on the type of press 140 used. For example, if a flat press 140 is used, more such gaps 148 may be present than would be present if a specially designed press 140 (including a press with contoured surfaces configured to mold the joint between the materials and/or components) were used.

Although the above discussion describes how a reinforcement member 122 may be sandwiched between two layers of material or materials, various thermal welding techniques may allow many types of components, and/or many types of materials to be similarly positioned without needing to stitch or otherwise couple the component to the layers of material or materials in another manner (e.g., by placing the component between two layers of material and stitching around it). In other words, thermal welding allows for a component to be embedded in between two layers of material as a result of the thermal weld between each layer of material, thus trapping the component in a cavity between layers, and/or allows for a component to be thermally attached to a single layer of material. The component, however, need not be smaller in size than the layers of material. In instances where the component has a smaller width and length than both of the layers of material it is to be coupled between, the component may be entirely embedded between the layers of material, with the layers of material forming a thermal weld between themselves in addition to or even in place of in between each layer of material, forming a thermal weld to the respective face or side of the component. In other instances, however, such as where at least a portion of the component protrudes beyond the edges of at least one of the layers of material it is to be coupled between, thermal welding may allow for the layers to be coupled to the component, even if the layers of material are not thermally welded to one another around all or a portion of the perimeter of the component.

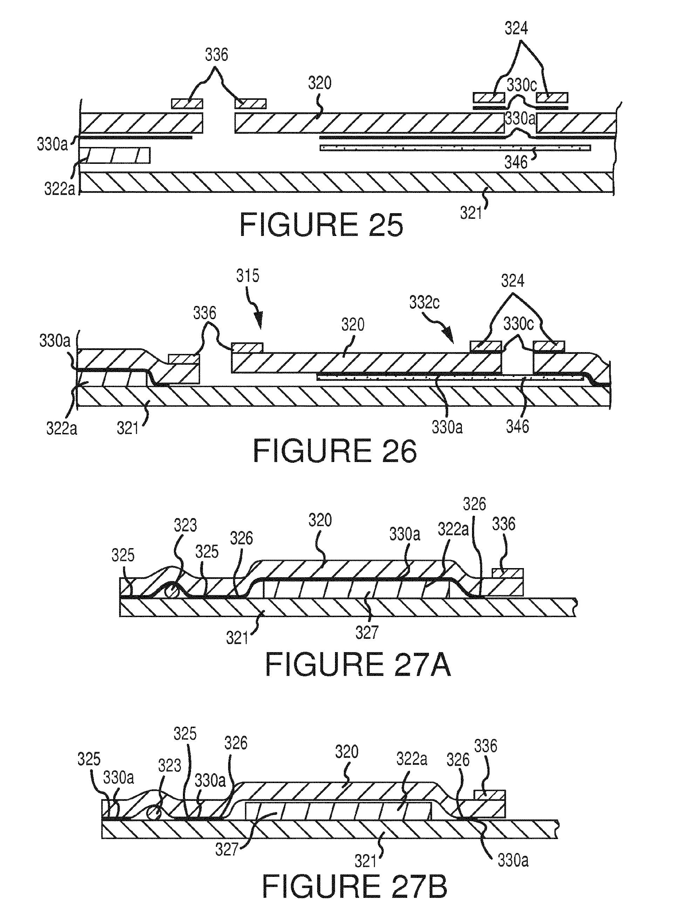

In still other examples, as described in more detail below with reference to Figures 27A and 27B for example, some thermally welded cases may include a single sheet or layer of adhesive. In these examples, the adhesive may secure a reinforcement member or other component in between two sheets of material by surrounding at least a portion of the perimeter of the reinforcement member or other component with a thermal weld between the two sheets of material, even if the adhesive does not thermally weld one of the sheets of material (the sheet proximate the adhesive) to the reinforcement member. In other examples, though, the adhesive may form a bond between one side of the reinforcement member and the sheet of material proximate the adhesive, thereby providing additional strength to secure the reinforcement member in place.

Referring now to Figure 9, following the thermal pressing of the layers of material to form the laminate 132, the laminate 132 may be formed into a case 100. For example, the laminate may be folded along the intersection 151 between the opposing end portions 138a, 138b and the middle section 138c to form the sidewalls 101, 102 and the bottom 103 of the case 100. The side flaps 104a, 104b, 105a, 105b may be folded and the free edges joined to create an upright attaché or briefcase type case 100 with three dimensions. The free edges of the side flaps 104a, 104b, 105a, 105b and/or the bottom edges of the middle section 130c may be joined together by thermal welding or by stitching. In other examples, two separate laminates 132 may be thermally welded together to create a case 100 such as a laptop sleeve, one example of which is described below.

In general, the laminate 132 or laminates 132 may be folded once or more than once, and may be formed into a variety of three dimensional shapes for a bag, case, or other object 100. The constituent materials and/or components, in conjunction with the number and type of folds and additional joining of the materials and components may define the shape and function of the object 100. Also, the internal and/or external reinforcement members 122, if any, may serve to support or structure the object 100 according to their placement within the layers of material 132.

With reference to Figure 9 and also referring back to Figures 1A through 3 and as described above, a first internal reinforcement member 122a may be a T-shaped board 122a, a second internal reinforcement member 122b may be a rectangular board 122b, and a third internal reinforcement member 122c may also be a rectangular board 122c. When the laminate 132 is folded into a case 100, the first internal reinforcement member 122a may provide support for the front side 101 of the case 100 - the upper portion 127 of the T-shaped board 122a may reinforce the top portion of the front side 101 of the case 100 (e.g., near the opening into the enclosed space 109 of the case 100), and the lower or trunk portion 128 of the T-shaped board 122a may provide support to the upper portion 127 of the T-shaped board 122a, and may also define the lateral inner-sides of the expandable pockets 115 on the outer surface of the front side 101 of the case 100.

The second internal reinforcement member 122b may provide support and protection to the bottom side 103 of the case 100. The second internal reinforcement member 122b may, for example, prevent the bottom side 103 of the case 100 from bulging when items are placed in the case, and may provide a support structure to hold items placed within the enclosed space 109 of the case 100. The third internal reinforcement member 122c may provide support to at least an upper portion of the rear side 102 of the case 100 in order to, for example, support the case 100 as it is carried.

After the laminate 132 is folded and formed into a case 100, with the side seams being thermally welded or stitched, a carrying handle 112 may be coupled to the top flap 108 in some examples. Also, in some examples, a support bar 125 and/or clip(s) 126 may be coupled to the left and right sides 105, 104 of the case 100, and may provide external support to the case 100. The clips 126 may be positioned over the top of the side seams, and may, in connection with a support bar 125, help keep the side seams of the case 100 upright even with the case 100 has few or no contents in it. The clips 126 and/or the support bar 125, when present, may also help prevent wear on the upper part of the side seams.

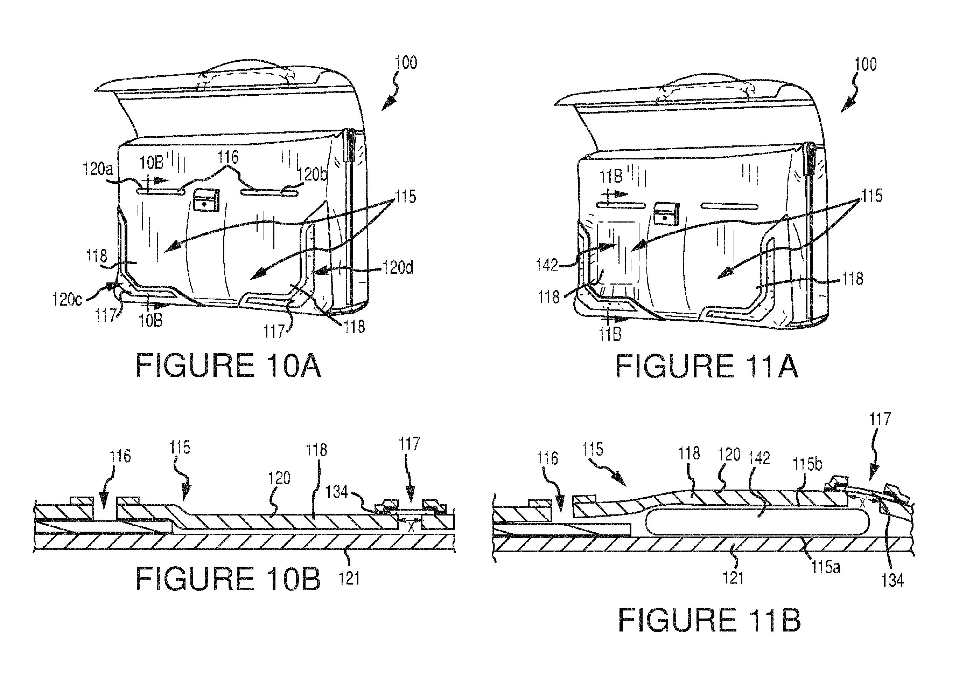

With reference now to Figures 10A and 11A, and the corresponding cross-section views of Figures 10B and 11B, one example of expandable pockets 115 are described. As explained above in connection with Figure 2, the outer material 120 may have two openings 120a, 120c in it, a first slit 120a that forms the access opening 116 to the interior of the pocket 115, and a second L-shaped opening 120c over which (or under which, as described below) a piece of elastic material 134, and optionally a leather 124 (or other material, for trim, reinforcement, or both) piece may be positioned to allow the pocket 115 to expand. The first access slit 120a may have a protective film 136 surrounding it on the exterior side of the outer material 120 in order to, for example, protect the outer material 120 from wearing due to a user putting items into the pocket 115 and removing them. Beneath the first slit 120a may be a reinforcement member 122a, and underneath that may be an inner liner 121. The L-shaped slit 120c forms an expansion slot 117 free "corner" or flap 118 that can move relative to the opposing edge of the slit 120c (by virtue of the elastic material 134) and allow the volume of the pocket 115 to expand to accommodate differently-sized objects positioned in the pocket 115. A piece of elastic material 134 may couple the two sides of the second slit 120c. Also, a strip of adhesive 130c (with the center cut-out) may couple the strip of elastic material 134 to a strip of leather 124 or other material (which may also have its center cut-out).

With reference to Figures 11A and 11B, an object 142 (such as a cell phone, media player, and so forth) may be placed in the expandable pocket 115, which may engage the inner 115a and outer walls 115b of the pocket 115 to bias them to expand the internal volume of the pocket 115. As the object 142 placed in the pocket 115 pushes the flap 118 upwardly and outwardly, the elastic expands 134, which allows the edges of the flap 118 and the opposite side of the slit 120c to move away from each other to enlarge the interior volume of the pocket 115. This biasing force causes the strip of elastic 134 to expand and increase the size of the outer wall 115b of the pocket 115. The amount increase in volume of the pocket 115 is limited in large part by the expansion of the elastic 134. The strip of elastic 134 may cause the expansion slot 117 to expand, for example, from a first distance X to a second distance X', with X' being larger than X.

Referring to Figures 1A, 10A, and 11A, the expandable pocket 115 may in some examples include a strip of elastic 134 on the bottom and left sides of the slit 120c of the pocket 115. In these examples, the bottom and left sides of the pocket 115 may be expandable whereas the right and top sides may be substantially inelastic. The corner flap 118 of the outer wall 115b formed by the L-shaped slit 120c, as noted above, in expansion, moves away from the margins of the opposite sides of the aperture 117 formed therein to expand the elastic 134 and enlarge the volume of the pocket 115.

Referring now to Figures 12 through 15, another example of a thermally welded case 200 will be described. The case 200 may in many aspects be similar to the case 100 described above with reference to Figures 1 through 11, except that the case 200 may include a different kind of external expandable pockets 215 and other exterior features, and may also be made of different types of constituent materials. With reference to Figures 12 through 12C, an inner liner 221 and a first sheet of adhesive 230a may be positioned on the bottom of a stack of layers to be thermally welded into a laminate 232, with the inner liner 221 and first sheet of adhesive 230a generally similar to the inner liner 121 and first sheet of adhesive 130a described above in connection with Figure 2, except that the first sheet of adhesive 230a includes two rectangular cut-out areas 231a, 231b. The respective perimeters 231c, 231d of the cut-out areas may be smaller than the outer perimeters 244a, 244b of two pocket back respective liners 244 (to be described below). Also, several reinforcement members 222a, 222b, 222c may be positioned on top of the first sheet of adhesive 230a, with the reinforcement members 222a, 222b, 222c being in some cases similar to the reinforcement members 122a, 122b, 122c in Figure 2. On top of the reinforcement members 222a, 222b, 222c, a second sheet of adhesive 230b may be positioned, with the second sheet of adhesive 230b generally similar to the first sheet of adhesive 230a, so that the two pocket back liners 244 adhere to the second sheet of adhesive 230b around the respective perimeters 244a, 244b of the two pocket back liners 244. As mentioned with reference to other examples of cases described herein, only a single sheet of adhesive 230 may be used in some embodiments, and the single sheet of adhesive may be either of the first or second sheets of adhesive 230a, 230b shown in Figure 12

Above the second sheet of adhesive 230b, the two pocket back liners 244 may be positioned, which may be made of an elastic material, such as elastane. The two pocket back liners 244 may generally be rectangular in shape, may be of similar size, and may be positioned over the two rectangular cut-out areas 231a, 231b of the first and second sheets of adhesive 230a, 230b. Two rimmed sheets of adhesive 230f may be placed on top of the two pocket back liners 244, with the outer perimeter of the two rimmed sheets of adhesive 230f being substantially similar to the respective perimeters 244a, 244b of the two pocket back liners 244. Two pocket front liners 246 may be positioned on top of the two rimmed sheets of adhesive 230f, with two pocket front liners 246 being substantially similar to the two pocket back liners 244 (e.g., generally rectangular, of the same size and perimeter, made of an elastic material, etc.), except that each of the two pocket front liners 246 may have a slot, aperture, or slit 247 in an area configured to form a part of the access opening 216 for one of the expandable pockets 215 of the case 200. As explained in more detail below, each respective expandable pocket 215 may be in between the respective pocket back liner 244 and the respective pocket front liner 246. On top of the two pocket front liners 246, two small sheets of adhesive 230g may be positioned, with each of the small sheets of adhesive 230g having a void of adhesive corresponding to the slot or slit 247 in the respective pocket front liner 246, and a void of adhesive corresponding to a U-shaped slot 220c, 220d in the outer material 220 of the case 200 (to be described below). On top of the two small sheets of adhesive 230g, the outer material 220 of the case 200 may be placed. The outer material 220 may be, for example, leather, canvas, nylon, and so forth.

The front external pockets 215 of the case 200 shown in Figures 12 through 17 may be expandable, similar to the front external pockets 115 of the case 100 shown in Figures 1 through 3, but may be more fully expandable because instead of being L-shaped, they are U-shaped and hence have an additional side that may be expandable. Also, the front external pockets 215 of the case 200 shown in Figures 12 through 17 is different from those shown in Figures 1 through 3 in that the elastic material 246 is layered beneath the outer material 220 of the case 200, as opposed to being layered on top of the material 220. In general, however, the elastic material 134, 244, 246 for either the L-shaped or U-shaped, (or many other shaped) pockets may be layered on top or beneath the outer material 220 of the case 200. In general, many types of shapes may be used for expandable pockets 115, 215. Also, many arrangements of elastic material 134, 244, 246, main or outer material 120, 220, inner linings 121, 221, reinforcement members 122, 222, and so forth may be used to create expandable pockets 115, 215. The type(s) of materials and other components used, along with the shape(s) of slits or cut-outs may generally define the space and expandability of the pockets 115, 215.

Returning to Figures 12 through 12C, similar to the arrangement in Figure 2, a U-shaped strip of adhesive 230d may be positioned on what will become the bottom and bottom corners of the rear side 202 of the case 200, with a U-shaped strip of leather 224 positioned on top of the U-shaped strip of adhesive 230d. The U-shaped strip of leather 224 positioned here may provide a decorative and/or a structural benefit to the case 200 in some cases. The U-shaped strip of leather 224 and adhesive 230d in Figure 12 may not, however have a center cut-out portion as in Figure 2. In general, the strip of leather 224 and adhesive 230d may have many different shapes and sizes, and the strip 224 may even be of a material other than leather, such as nylon.

Also, a U-shaped strip of adhesive 230e may be positioned over what is the right side 220g of the outer material in Figure 2 (that will become the left, middle, and right edges of the top flap 208). A U-shaped reinforcement member 222d may be positioned over the U-shaped strip of adhesive 230e, with the profile of the U-shaped reinforcement member 222d generally smaller than the profile of the U-shaped strip of adhesive 230e. Also, a U-shaped piece of material 224, such as leather, may be positioned over the U-shaped reinforcement 222d and the U-shaped adhesive 230e, with the profile of the U-shaped leather 224 or other material 224 substantially the same as the profile of the U-shaped strip of adhesive 230e. The U-shape formed by these elements may form relatively rigid and reinforced corners and middle of the top flap 208 in order to withstand frequent lifting, access, and lowering of the top flap 208. However, as in the preceding paragraph, many different types and shapes of strips of adhesive, reinforcement members, and leather or other material may be used, in order to give a different aesthetic effect or a different structural function.

Also, similar to Figure 2, a first portion 236c of generally rectangular shaped protective film 236 with two slots 236a, 236b in it may be positioned over the two slots 220a, 220b that form the access openings 216 for the expandable pockets 215 on the front side 201 of the case 200, and a second portion 236d of generally rectangular shaped protective film 236 may be positioned over the middle, notched portion of the outer material 220 that will form the bottom side wall 203 of the case 200 when formed.

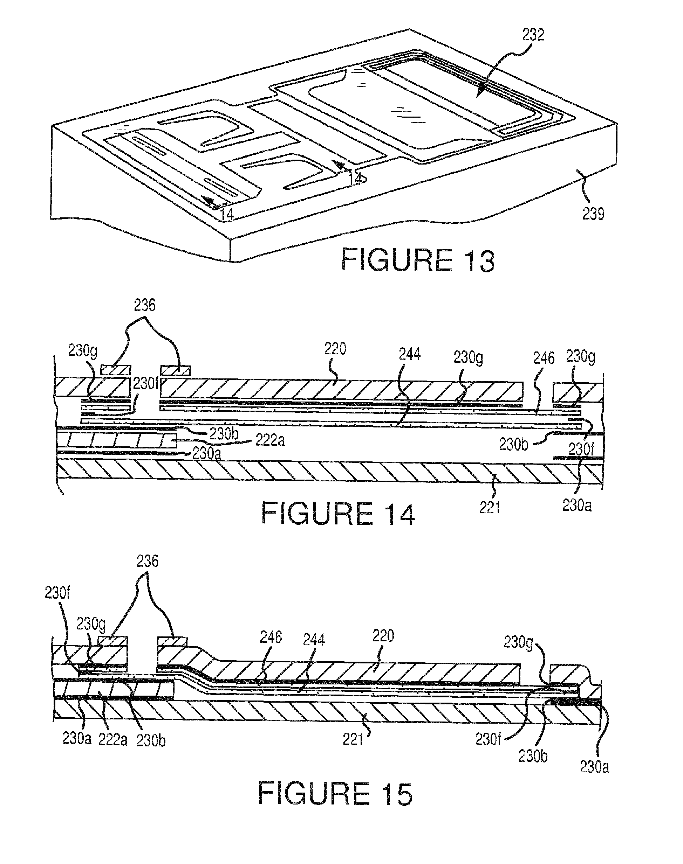

With reference to Figure 13, the layers of material shown in Figure 12 may be thermally welded together into a laminate 232 using a number of different thermal welding techniques, such as those described above with reference to Figures 3 through 8.

With reference to Figure 14, an exploded section of various layers that may be thermally welded together in one or more thermal welding iteration(s) is shown, with the section taken along line 14-14 of Figure 13 and generally corresponding to a section of one of the expandable pockets 215 of the case 200. The layers may include a protective film 236, an outer material 220, a small sheet of adhesive 230g, a pocket front liner 246, a rimmed sheet of adhesive 230f, a pocket back liner 244, a second sheet of adhesive 230b, a reinforcement member 222a, a first sheet of adhesive 230a, and an inner liner 221.

With reference to Figure 15, and referring back to Figures 5A through 7G, the various layers of material in Figure 14 may be thermally welded together in one or more thermal welding iterations. The layers of material in Figure 14 may, for example, be thermally welded by a flat press similar to that shown and described above in connection with Figures 6A through 6D, or may be thermally welded together by a specially designed, profile-type press, similar to that shown and described above in connection with Figures 5A through 5D. In some cases, the layers of material shown in Figure 14 may be thermally welded together in more than one iteration, such as those shown and described above in connection with Figures 7A through 7G.

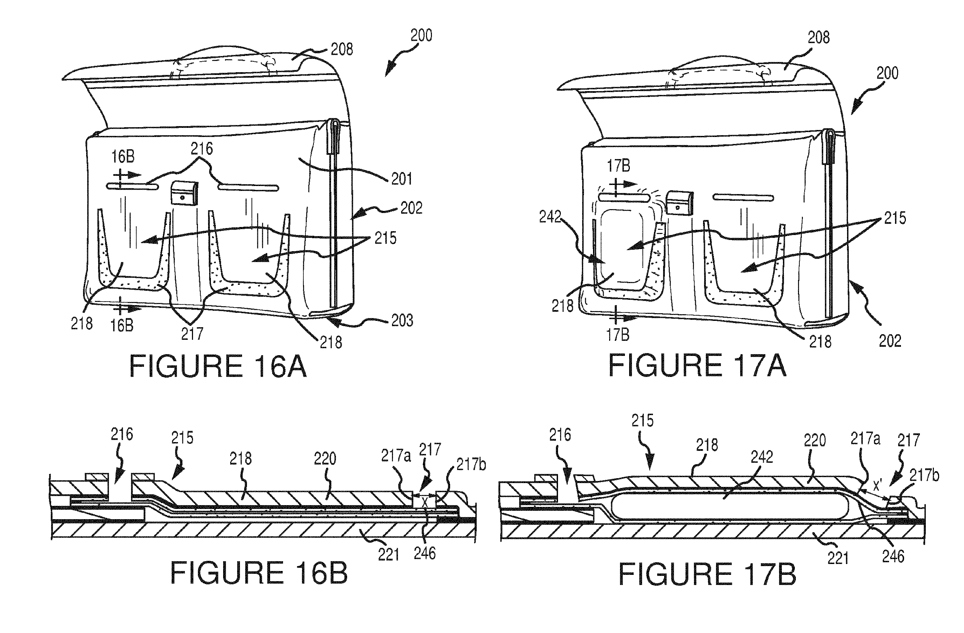

With reference to Figures 16A through 17B, the operation of the expandable pockets 215 will now be explained. When no object is inserted into the expandable pockets 215, as in Figure 16A, the pocket 215 is in the non-expanded configuration. This means, in one example, the outer material 220 (and the pocket front liner 246 to which it is coupled) may generally be flat or flush (i.e. in a collapsed configuration) with the pocket back liner 244 and the inner liner 221 in part because the elastic material 246 spanning the expansion slot 217 in the expandable pocket 215 pulls the opposing edges 217a, 217b of the expansion slot 217 toward one another to help bias the pocket 215 to the non-expanded configuration.

With reference to Figures 17A and 17B, when an object 242 is inserted into the interior volume of the expandable pocket 215 via the access opening 216, the pocket 215 expands to receive the object 242. The expansion is facilitated by the stretching of the elastic material 246 between the opposing edges 217a, 217b of the expansion slot 217 when the object 242 pushes the flap outwardly. Because the flap or tongue 218 of the outer material 220 (defined by the U-shaped material cut-outs 220c, 220d) is relatively non-expandable, the object 242 causes the flap 218 to move outwardly and away from the opposing edges of the U-shaped cut-outs 220c, 220d, causing the elastic material 246 - particularly the elastic pocket front liner 246 spanning the U-shaped cut-outs 220c, 220d of the outer material 220 - to stretch and thus expand the interior dimension of the pocket 215. The dimension of the expansion slot 217 increases to X' when expanded, from a smaller dimension X when not expanded. Because the flap or tongue 218 of the outer material 220 is coupled to the elastic material 246, the flap or tongue 218 may be biased outward and away from the margins of the expansion slot 217 of the outer material 220 to increase the volume of the pocket 215 sufficiently and at the particular location in the pocket 215 to snugly receive the object 242 positioned therein. This operation may be similar to the corner flap 118 moving in the expandable pockets 115 of the case 100 shown in Figures 1A through 1C, or in Figures 10A through 11B, but as explained above, because of the specific shape and arrangement of materials, the selective expansion (e.g., the elastic material expands, while the non-elastic outer material does not expand but is still biased outward) may be different. In general, many different types of shapes or graphics, and many different arrangements of materials may be used to provide for a variety of different pockets or other selectively controlled expansion mechanisms 115, 215.

Also, as explained above with reference to Figure 1B, some pockets may be formed that are not expandable. In general, by layering materials without using elastic materials, non-expandable pockets may be formed.

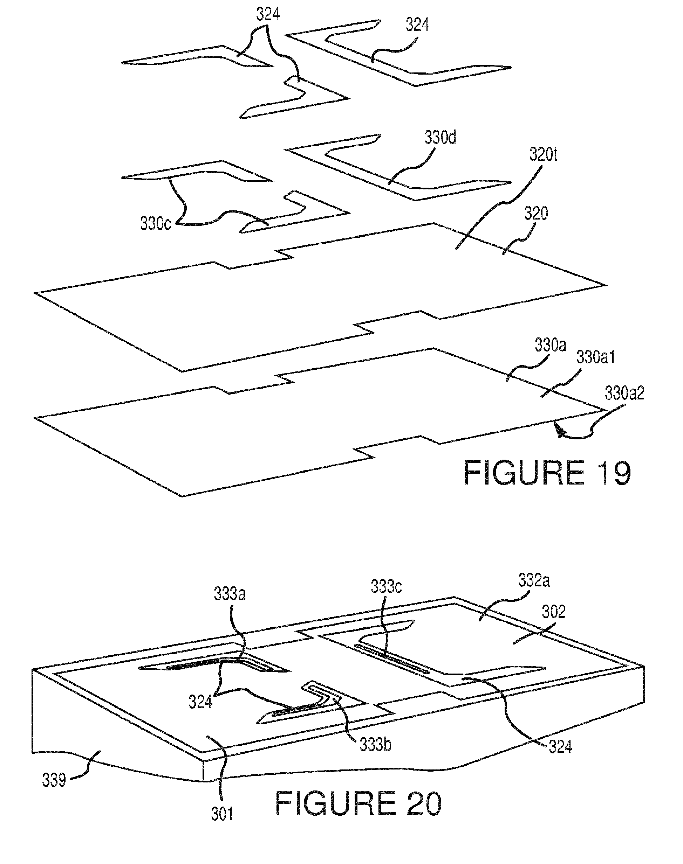

With reference now to Figures 18 through 29B, another example of a thermally welded case 300 will be described. The case 300 shown in Figures 18 through 29B may in many aspects be similar to the case 100 shown in Figures 1A through 1C. Although the assembly of the case 300 will be described with reference to Figures 19 through 24, Figure 18 shows a perspective view of the different layers that may be included in the case 300. Beginning at the bottom, Figure 18 shows an inner liner 321, a first set of reinforcement members 323, a second set of reinforcement members 322a, 322b, 322c, a sheet of adhesive 330, a set of elastic pocket liners 346, an outer material 320, a set of protective films 336, a set of strips of adhesives 330c, 330d, and a set of leather 324 or other decorative elements are shown. These various layers and components may be thermally welded in a plurality of steps or acts, as described below with reference to Figures 19 through 24. These steps or acts, while described herein in a particular order, may not necessarily be performed in the particular order described. Also, intervening steps or acts may be implemented without affecting the inventive aspects of the various steps or acts taken in any of a variety of sets or sub-sets of the steps or acts described herein. The shapes and sizes of many of these materials and components may be similar to those in other examples of thermally welded cases described herein.

With reference to Figure 19, in an early or initial step or act of assembly, a set of three leather or other decorative elements 324 may be positioned above a set of three similarly shaped adhesive strips 330c, 330d, which together are positioned on a top side 320t of an outer material 320. One of the leather or other decorative elements 324 and corresponding adhesive strip 330d may be generally in the shape of a U, and the other two leather or other elements 324 and adhesive 320c may be generally in the shape of an L, similar to those described above with reference to Figures 1A through 1C, except that no middle cutaway portions may be included in the U and L shaped items. Of course, in other examples, more or fewer leather or other decorative elements 324 and strips of adhesive 330 may be used or different shapes of leather and decorative elements 324 may be used; those shown in Figure 19 are merely illustrative. The strips of adhesive 330c, 330d may generally be similar in shape and size as the corresponding leather or other decorative element 324. Also, in some examples, the decorative element 324 may also or alternatively function as structural elements. For example, as shown in Figure 19, two L-shaped leather strips 324 may provide a frame to the lower left and right corners of the front side 301 of the case 300 when formed, and the U-shaped leather strip 324 may similarly provide a frame to the entire lower portion of the rear side 302 of the case 300 and to the left and right sides of the rear side 302 of the case 300.

Referring still to Figure 19, in the first step of assembly, a sheet of adhesive 330a may be positioned adjacent the bottom surface of the outer material 320. In some examples, the sheet of adhesive 330a may include adhesive material on both sides of the sheet. However, only the side of adhesive material 330a1 closest to the outer material 320 may be exposed or ready for activation and bond with the outer material 320 during the first step of assembly. The other side of adhesive 330a2 may be covered with a peel-off backing during the first step of assembly, or may otherwise be prevented from being activated during the first step of assembly.

The shape and size of the outer material 320 and the sheet of adhesive 330a may generally be similar to the outer material 120 and one of the sheets of adhesive 130a, 130b described above with reference to Figures 2 and 2A, except the outer material 320 may not include any cut outs.

With reference to Figure 20, the materials and components shown in Figure 19 may be aligned and positioned on a surface 339 in a second step or act of assembly (sequentially or not relative to the initial step or act) in order to thermally weld the materials and components together by using heat and/or pressure, similar to one or more of the thermal welding techniques described above with reference to Figures 5A through 7G for example. As such, a first intermediate laminate 332a may be formed from the materials and components shown in Figure 19. Also with reference to Figure 20, a laser or other cutting tool may cut one or more holes or openings 333a, 333b, 333c through one or more portions of the first intermediate laminate 332a after the first intermediate laminate 332a is formed by thermal welding. For example, as shown in Figure 20, a laser may cut two L-shaped openings 333a, 333b into the laminate 332a that generally align with, but are smaller than, the two L-shaped leather strips 324 or other decorative elements. Similarly, a laser may cut one or more narrow, linear slits or apertures 333c into the laminate along the bottom of the U-shaped reinforcement member 324. Of course more of fewer, or cuts of different shapes and sizes may be made in the first intermediate laminate 332a; those shown in Figure 20 are merely illustrative.

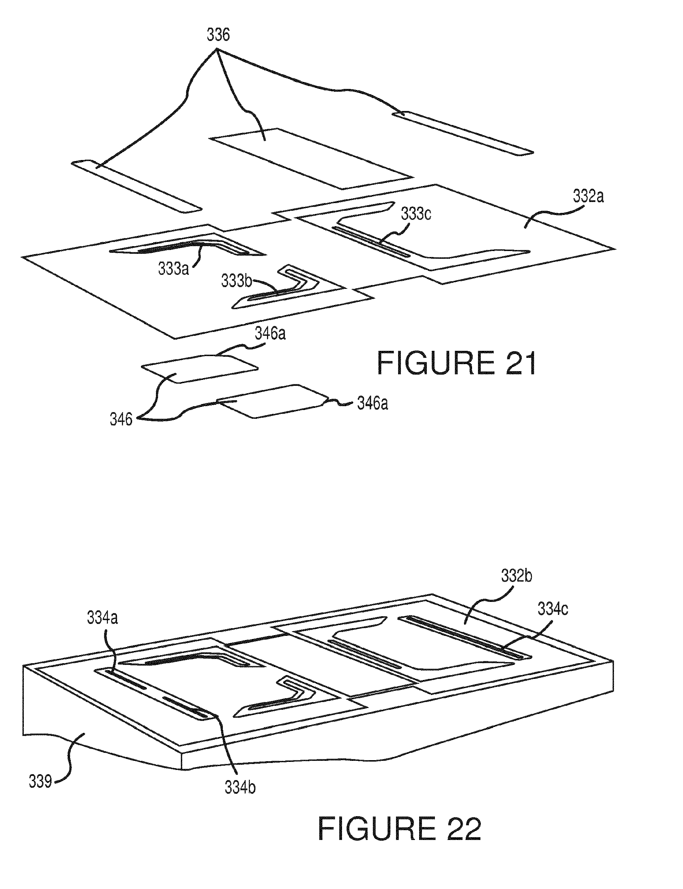

With reference now to Figure 21, one or more additional materials or other components 336, 346 may be positioned on or below the first intermediate laminate 332a shown in Figure 20 in a third or next step or act of assembly. For example, two small generally rectangular pocket liners 346 may be positioned below the first intermediate laminate 332a. The pocket liners 346 may have a corner notch 346a to match the L-shaped leather 324. In other examples, L-shaped inserts 346 may be used in place of a pocket liner 346, and the L-shaped inserts 346 may generally be about the same size as, but slightly larger than, the L-shape cutouts 333a, 333b in the first intermediate laminate 332a. The pocket liners 346 or L-shaped inserts 346 may include an elastic material such as elastane, in order to create one or more expandable pockets 315 in the thermally welded case 300. In order to thermally couple the pocket liners 346 or L-shaped inserts 346 to the first intermediate laminate 332a, a portion of the adhesive 330a on the bottom side of the first intermediate laminate 332a may be exposed by, for example, removing a portion of backing material that is generally the same shape as the pocket liner 346 or L-shaped insert 346.

Also with reference to Figure 21, in the third step of assembly, one or more portions of protective film 336 may be positioned on top of the first intermediate laminate 332a, similar to the rectangular shaped protective film 136d, 236d shown and described with reference to Figures 2 and 12. Each portion of protective film 336 may be self-adhesive (not shown) in some examples as shown in Figure 21, whereas in other examples, a sheet of adhesive may be used to thermally couple the protective film to the first intermediate laminate 332a.

With reference now to Figure 22, the first intermediate laminate 332a, the pocket liners 346 or L-shaped inserts 346 and the protective film 336 may be positioned appropriately and thermally welded together in order to create a second intermediate laminate 332b in a fourth step of assembly. Also, a laser or other cutting tool may cut one or more holes or openings 334a, 334b, 334c through one or more portions of the second intermediate laminate 332b after the second intermediate laminate 332b is formed by thermal welding. For example, as shown in Figure 22, a laser may cut two narrow, linear slits or apertures 334a, 334b into the laminate that generally align with one of the protective film portions 336. Similarly, a laser may cut a narrow, linear slit or aperture 334c along one of the other protective film portions 336. Of course more of fewer, or cuts of different shapes and sizes may be made in the second intermediate laminate 332b; those shown in Figure 22 are merely illustrative. Other mechanisms than a laser (such as a blade, scissors, or knife, etc.) may be used to form the cuts or slits or apertures 333a, 333b, 333c, 334a, 334b, 334c described herein.

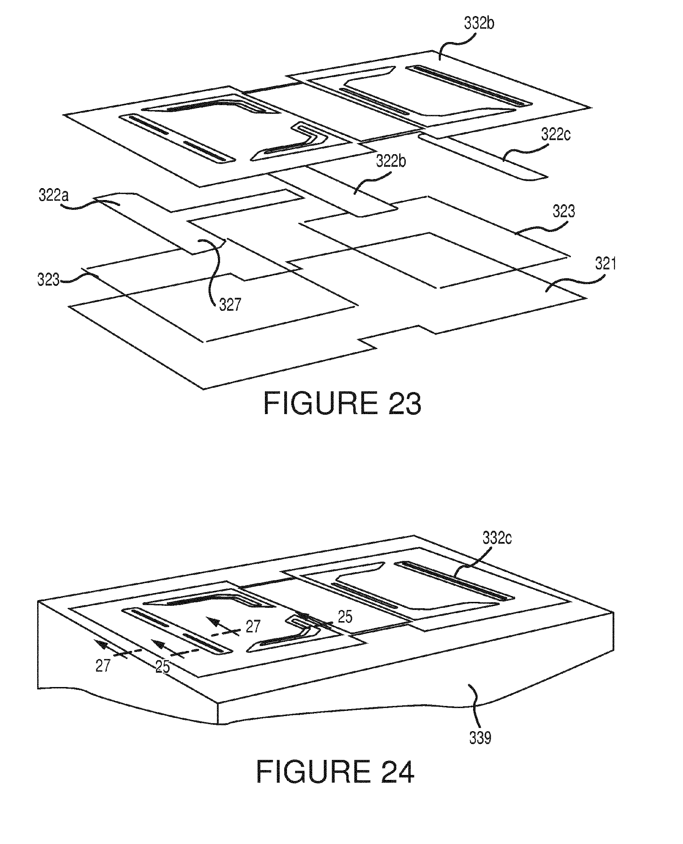

Referring to Figure 23, in a fifth step of assembly, additional components and materials may be positioned relative to the second intermediate laminate 332b. For example, an inner lining sheet 321 may be positioned below the second intermediate laminate 332b, with the inner lining sheet 321 having width and length proportions and a size generally similar to the second intermediate laminate 332b. Also, a plurality of reinforcement members 322 (including 322a, 322b, 322c), 323 such as polypropylene sheets or other type of boards 322 and/or fiberglass or other type of rods 323 may be positioned between the second intermediate laminate 332b and the inner lining sheet 321. The polypropylene or other type of boards 322 may generally be similar to those shown and described above with reference to Figure 2, except the T-shaped reinforcement member 322a may include a lateral beam 327 that is less tall than that 127 of the T-shaped reinforcement member 122a shown in Figure 2. The fiberglass or other type of rods 323 may generally be positioned along what will become the top, bottom, left, and right sides of the front and rear of the thermally welded case 300. In order to thermally couple the reinforcement members 322, 323 and the inner lining 321 to the second intermediate laminate 332b, a portion or all of the adhesive 330a on the bottom side of the second intermediate laminate 332b may be exposed by, for example, removing a portion of backing material.

Referring now to Figure 24, in a sixth step of assembly, the second intermediate laminate 332b along with the other components and materials in Figure 23 may be positioned appropriately and thermally welded together in order to create a final laminate 332c.

With reference to Figure 25, an exploded section, taken along line 25-25 of Figure 24, of various layers that may be thermally welded together in the six steps of assembly described above is shown, with the layers not thermally welded but positioned as they will be in the final laminate 323c. The layers shown in Figure 25 may generally correspond to a section of one of the expandable pockets 315 of the case. The layers may include a protective film 336, a leather element 324, a strip of adhesive 330c for the leather element 324, an outer material 320, a sheet of adhesive 330a, a reinforcement member 322a, a pocket insert (elastic) 346, and an inner lining 321.

With reference to Figure 26, and referring back to Figures 19 through 24, the various layers and components in Figure 25 may be thermally welded together in a plurality of assembly steps.

With reference to Figures 27A and 27B, two examples of a section, taken along line 27-27 of Figure 24 will be described. With reference to Figure 27A, in a first example, the adhesive 330a may encompass the entire cross section of both the rod 323 and the lateral beam of the reinforcement member 322a. The adhesive 330a may in some examples be exposed across the entire cross section. In this manner, a continuous portion of adhesive 330a is wrapped around the rod 323 and the lateral beam 327 of the reinforcement member 322a. The adhesive 330a may or may not adhere to the rod 323 and the reinforcement member 322a, but due to the thermal weld of the outer material 320 to the inner liner 321 around the respective perimeters 325, 326 of the respective rod 323 and reinforcement member 322a, the rod 323 and reinforcement member 322a may be secured in place. In those examples where the adhesive does adhere to the rod 323 or reinforcement member 322a, such adhesion provides additional strength to secure the rod 323 or reinforcement member 322a in place relative to the outer material 320 and inner lining 321.

With reference to Figure 27B, in a second example, the adhesive 330 may encompass only portions of the cross section of the rod 323 and the lateral beam 327 of the reinforcement member 322a. For example, the adhesive 330a may be exposed only along certain portions by only removing the adhesive backing along those portions, or the adhesive sheet 330a may not include any adhesive material other the other portions. In this manner, no adhesive may be wrapped around the rod 323 or the lateral beam of the reinforcement member 322a but, due to the thermal weld of the outer material 320 to the inner liner 321 around the respective perimeters 325, 326 of the respective rod 323 and reinforcement member 322a, the rod 323 and reinforcement member 322a may be secured in place.

Referring to both Figures 27A and 27B, a single sheet (or other form) of adhesive 330a may be used to secure a rod 323, reinforcement member 322a, or any other component between two or more sheets of material 320, 321 (or laminates 332a, 332b). The adhesive 330a may or may not span the component(s) (e.g., may be absent along portions of the component(s)), but may secure the component(s) in place due to the thermal weld formed around at least some of the perimeters 325, 326 of the component(s). It should be noted that not the entire perimeter 325, 326 of a component need be secured by a thermal weld - for example, a rectangular reinforcement member may be secured between two sheets of material by thermal welds along only portions of the reinforcement member's four edges, leaving the corners of the reinforcement member unsecured by adhesive. Also, as described above, a plurality of sheets of adhesive (or a plurality of other forms of adhesive) may be used to secure a single component between two sheets of material, although using only a single sheet may be advantageous in some examples due to cost and manufacturing considerations.

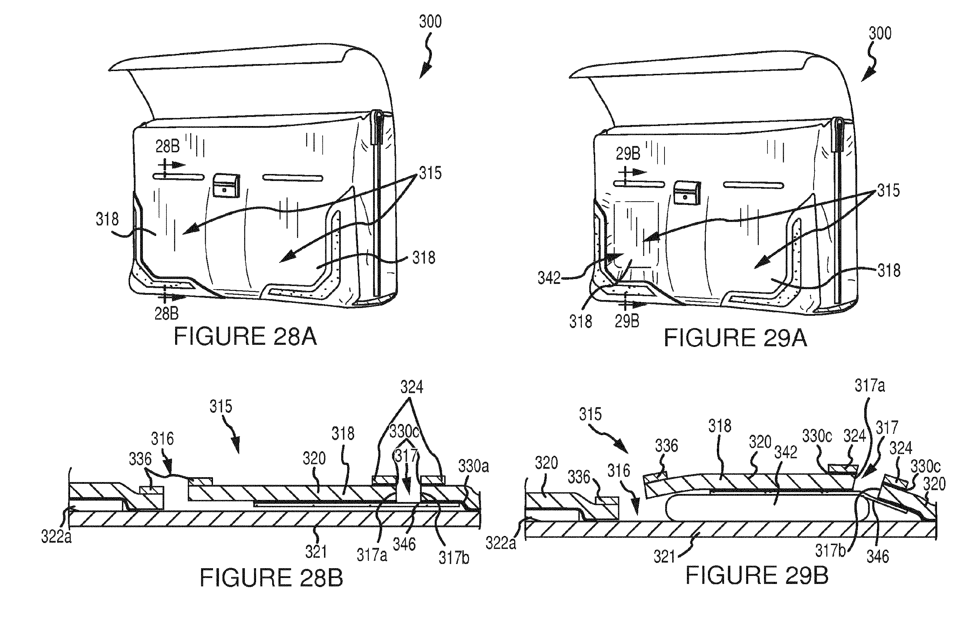

Referring to Figures 28A through 29B, the operation of the expandable pockets 315 will now be explained. When no object is inserted into the expandable pockets 315, as in Figure 28A, the pocket 315 is in the non-expanded configuration. This means, in one example, the outer material 320 (and the pocket front liner 346 to which it is coupled) may be in a collapsed configuration in part because the elastic material 346 spanning the opening or expansion slot 317 in the pocket 315 pulls or biases the opposing edges 317a, 317b of the opening 317 toward one another the help bias the pocket 315 to the non-expanded configuration.

With reference to Figures 29A and 29B, when an object 342 is inserted into the interior volume of the expandable pocket 315 via the access opening 316, the pocket 315 expands to receive the object 342. The expansion is facilitated by the stretching of the elastic material 346 between the opposing edges 317a, 317b of the expansion slot 317 when the object 342 pushes the flap 318 outwardly. In general, the expandable pocket 315 shown in Figures 28A through 29B is similar to the expandable pocket 115 as shown and described with reference to Figures 10A through 11B, except that instead of the elastic material 134 being exterior to the outer material 120, the elastic material 346 is in between the outer material 320 and the inner lining 321.

The thermally welded case 300 shown in Figures 28A through 29B may be advantageous over the case 100 shown in Figures 1A through 1C because the case 300 in Figures 28A through 29B may require fewer welding steps, fewer sheets or types of adhesive 330, and so forth. Furthermore, because the elastic material 346 of the case 300 in Figures 28A through 29B is positioned inward of the expandable pocket 315, the pocket 315 may be less likely to catch on objects, and may provide a better aesthetic appeal.

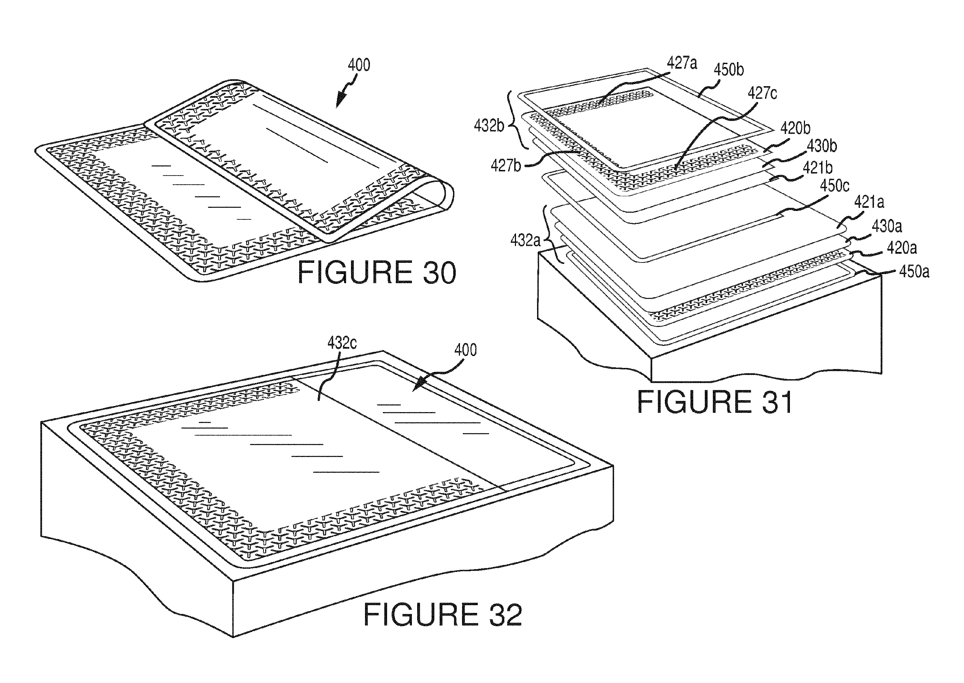

Referring now to Figures 30 through 34A, another example of a thermally welded case 400 will be described. With reference to Figure 30, the case may in some aspects be similar to the cases 100, 200, 300 described above, except that the case 400 may be adapted to hold, for example, a laptop or tablet computer or other electronic or generally parallelepiped shaped (or different shaped) object.

With reference to Figures 31 and 32, various layers or panels of material and/or other components may be arranged in a stack or laminate of layers, similar to the description above related to Figures 2 and 12. In some embodiments, the layers or panels of materials may be thermally welded all at the same time to create, in one thermal welding step, the case 400. Or, of course, multiple thermal welding steps may be utilized.

Referring to Figure 31, a self-adhesive bottom rim 450a that is generally rectangular in shape may be positioned at the bottom of a stack. The rim 450a may be, for example a centimeter or two wide, and may define an opening between its left, right, upper, and lower sides. A first or bottom sheet of perforated outer non-elastic material 420a may be positioned over the self-adhesive rim 450a. The non-elastic material 420a may generally be rectangular shaped, and may have a profile that is substantially coexistent with the profile of the self-adhesive bottom rim 450a. The non-elastic material 420a may have a series of perforations or apertures 424a along its perimeter. The perforations 424a may be Y-shaped as shown in Figure 31, although in other examples, they may take many other shapes or forms, such as circles, squares, L-shapes, I-shapes, and so forth. The non-elastic material 420a may be leather in some examples, but may be canvas, nylon, or another suitable material or material(s) in other examples.

A first sheet of adhesive 430a may be positioned over the non-elastic material 420a, with the first sheet of adhesive 430a having a substantially identical shape as the non-elastic material 420a. In some embodiments, the first sheet of adhesive 430a may have portions cut out, such as portions that correspond with the Y- or other shaped perforations 424a in the non-elastic material 420a, although in other embodiments, the sheet of adhesive 430a may not have any portions cut out. A first sheet of elastic material 421a may be positioned over the first sheet of adhesive 430a, and may be, for example, elastane, neoprene, and so forth.

Using one or more of the thermal welding techniques described above, or another thermal welding technique, a first laminate 432a may be formed from the self-adhesive bottom rim 450a, the first sheet of perforated outer non-elastic material 420a, the first sheet of adhesive 430a, and the first sheet of inner elastic material 421 a. These layers may be thermally welded together to form a first, bottom laminate 432a.

Still referring to Figure 31, a second sheet of elastic material 421b may be positioned at the bottom of a stack of layers to be thermally welded together, and may be, for example, elastane, neoprene, and so forth. The second sheet of elastic material 421b may be generally rectangular in shape, and may have a similar width as the first laminate 432a, but may have a smaller length, as shown in Figure 31. A second sheet of adhesive 430b may be positioned over the second sheet of elastic material 421b (with or without cut outs), with the second sheet of adhesive 430b having a substantially identical shape as the second sheet of elastic material 421 b.

Next, a second or top sheet of perforated outer non-elastic material 420b may be positioned over the second sheet of adhesive 430b, with the second or top sheet of perforated outer non-elastic material 420b having a substantially identical shape as the second sheet of adhesive 430b and the second sheet of elastic material 421 b. The perforations or apertures 424b in the second or top sheet of perforated outer non-elastic material 420b may be substantially similar to the perforations 424a in the first or bottom sheet of perforated outer non-elastic material 420a, but may only extend along three sides 427a, 427b, 427c of the material, as shown in Figure 31. Also, a self-adhesive top rim 450b that is generally rectangular in shape may be positioned at the top of the stack of layers, and may have a width similar to the bottom rim 450a, and may have a profile that is substantially similar to the profile of the second sheet of outer non-elastic material 420b.

Using one or more of the thermal welding techniques described above, or another thermal welding technique, a second laminate 432b may be formed from the second sheet of inner elastic material 421b, the second sheet of adhesive 430b, the second sheet of non-elastic perforated outer material 420b, and the self-adhesive top rim 450b. These layers may be thermally welded together to form a second, upper laminate 432b.

After the first, bottom 432a and the second, upper 432b laminates are formed, they may be thermally welded together by positioning a U-shaped strip of adhesive or a self-adhesive middle rim 450c between them around the three sides 427a, 427b, 427c of perforation of the second sheet of non-elastic perforated outer material 420b, and employing one of the thermal welding techniques described above, or another thermal welding technique.

With reference to Figure 32, the thermally welded case 400 may have a controlled expandability of at least a portion or portions of the enclosed space of the case 400 based on the perforations or apertures 424a, 424b on the outer materials 420a, 420b. The thermal welding of the elastic 421a, 421b and the perforated non-elastic material 420a, 420b (e.g., leather) may create a zone of selectively controlled expansion. The zone of selectively controlled expansion may, in some examples, be around the perimeter of the case 400, but may alternatively or additionally be many places on the case 400. In general, the placement, the size, and the shape of the perforations or apertures 424a, 424b in the outer materials 420a, 420b may define how and in what directions the case 400 may expand.

In some examples, only one portion of the case 400 (e.g., the first, bottom, laminate 432a or the second, top laminate 432b) may include perforations 424a, 424b in the outer material 420, thereby allowing only that one portion to have a controlled expandability, with the other side being substantially inelastic. In other examples, and as shown in Figures 30 through 34A, both the upper and lower portions of the case 400 may include perforations 424a, 424b in the outer material 420a, 420b.

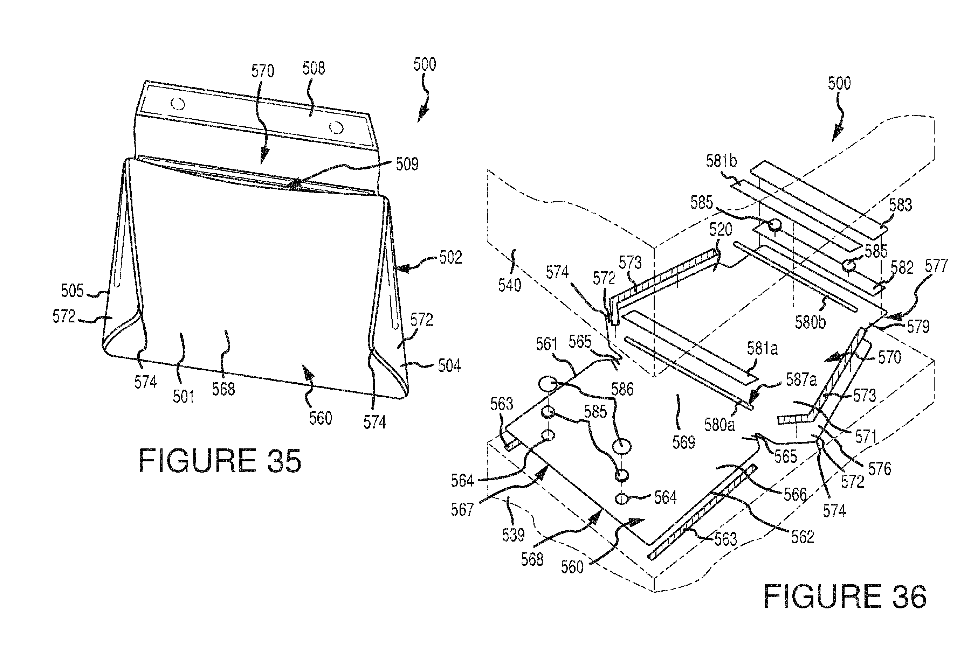

In some examples of a case similar to that shown in Figures 30 through 32, one or more rims 450a, 450b, 450c may be excluded. For example, in one type of case, rather than having first, bottom 432a and second, top 432b laminates, a single laminate may be formed, and sides of the single laminate may be folded over onto a portion of the single laminate to form a case, for example as described below with reference to Figures 35 through 45. At least some of the benefits of such a simplified case may include no protrusion on the perimeter of the case, fewer assembly steps, and so forth.

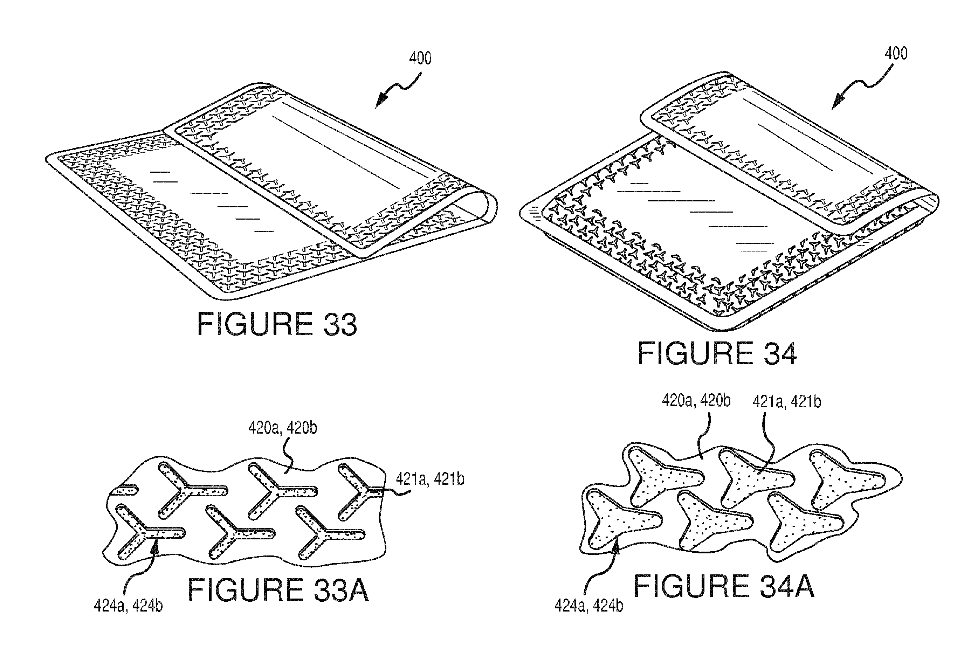

With reference now to Figures 33 through 34A, the operation of the selectively-controlled expandability of the case 400 will be described. When the case 400 is empty, the elasticity of the elastic material 421a, 421b may cause the perforations or apertures 424a, 424b in the non-elastic material 420a, 420b to contract because of the thermal bond between the elastic material 421a, 421b and the non-elastic material 420a, 420b. However, when an object is placed within the enclosed space of the case 400, the perforations 424a, 424b in the non-elastic material 420a, 420b may allow portions of the elastic material 421a, 421b to be stretched while the non-perforated portions of the non-elastic material 420a, 420b remain substantially inelastic, thereby creating a selectively-controlled expandable portion of the case 400. This operation may be similar to the operation of the expandable pockets 115, 215 described above in connection with Figures 10A through 11B and Figures 16A through 17B, but because the placement, size, and shape of the perforations 424a, 424b in the outer materials 420a, 420b is different than in those figures, the case 400 may expand in a different manner.

With reference to Figures 35 through 42, another example of a thermally welded case 500 will now be described. With reference to Figure 35, the case 500 may in some aspects be similar to the case 400 shown and described with reference to Figure 30, except that the case 500 may be formed form a single laminate 532 folded over on itself, as described in more detail below. In some but not all examples, the thermally welded case 500 shown in Figure 35 may not include selectively-controlled expandable portions, whereas in other examples the case may include selectively-controlled expandable portions.

With reference to Figure 36, various components may be thermally welded to one or more sheets of material. In some examples, one sheet of material 520 may be used, whereas in other embodiments multiple sheets of material may be thermally welded together. Furthermore, each sheet of material may include a single layer of material, whereas in other examples several different layers of material may be thermally welded together (such as an inner lining and outer material as described above) into one or more sheets of material having a plurality of layers (more than one). In Figure 36, a single sheet of material 520 may be used, and the single (laminate) sheet of material 520 may include several layers pre-joined together, or may be a single layer of material. In one example, the single (laminate) sheet 520 may include layers of nylon, neoprene, polyurethane, and/or other materials. In one example, the nylon layer may be adapted to be positioned on the inside of the thermally welded case 500 when completed, and the polyurethane layer may be positioned on the outside, with a neoprene layer coupled between the nylon and the polyurethane layers.

The sheet(s) of material(s) 520 may define two portions; a first portion 560 that will form the front wall 501 of the case 500 when complete, and a second portion 570 that will form the rear wall 502 of the case 500 and the top flap 508 of the case. Each of the first 560 and second 570 portions has an inner surface 566, 576 and outer surface 567, 577, referring for example to when the case 500 is completed and one surface 566, 576 is inside the interior volume 509 and one surface 567, 577 is outside of the interior volume 509. The second portion 570 also may include two or more side wings or flaps 572, a portion of each of which will form the respective left and right integrally formed side walls 504, 505 of the case 500 when complete. In some examples, the first portion 560 may generally be rectangular in shape and the part 571 of the second portion 570 that will form the rear wall 502 of the case 500 may generally have a similar shape as the first portion 560. The first portion 560 and the corresponding part 571 of the second portion 570 may be approximately the size of, or slightly larger than, a typical laptop or tablet computer - for example 38 centimeters wide by 25 centimeters tall, or 15 inches wide by 10 inches tall. The part of the second portion 570 that forms the top flap 508 may be the same width (or wider) as the first portion 560, and may be approximately 8 centimeters or 3 inches in height. The height of the flap 508 may be sufficient to cover the enclosed or interior volume 509 of the case 500 and may further serve as an aesthetic element of the case 500.

With reference to Figures 35 through 42, a generally rectangular shaped case 500 is shown and described, or in other words, the case 100 includes one or more portions each with at least one substantially rectangular shaped area (e.g., 571. It will be understood that many other, different shaped cases may similarly be constructed, such as circular cases, triangular cases, and so forth. In general, the size and shape of the case are defined by the size and shape of the first 560 and second 570 portions.

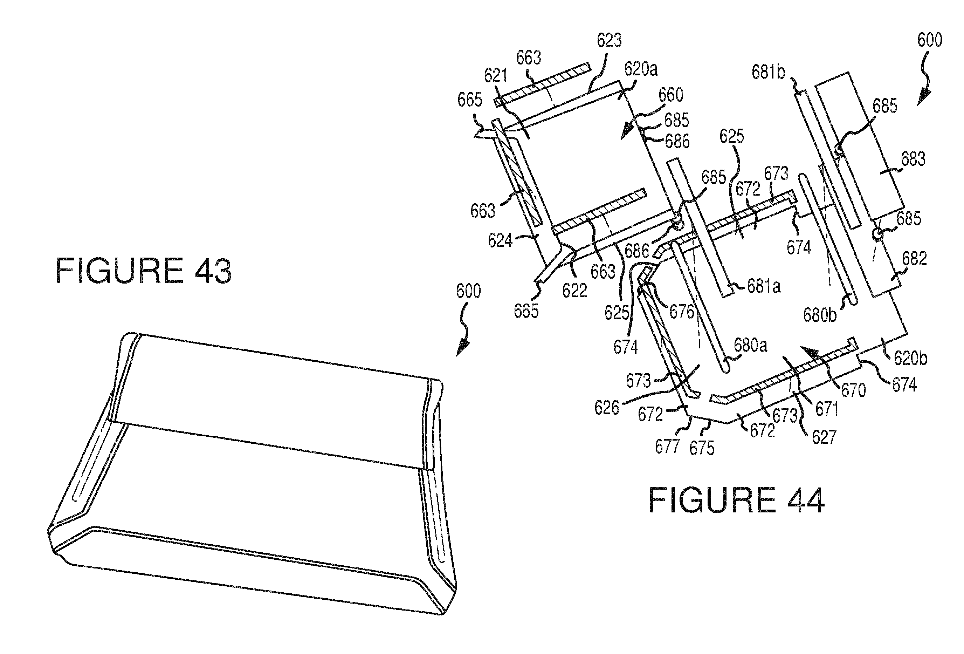

Also, with reference to Figures 35 through 42, the first 560 and second 570 portions may be defined by a single, common sheet of material 520 in some examples. With reference to Figures 43 through 45, in other examples, the first portion may be defined by a first sheet of material and the second portion may be defined by a second sheet of material. In general, any number of sheets of materials and any number of portions may be used in constructing a thermally welded case.

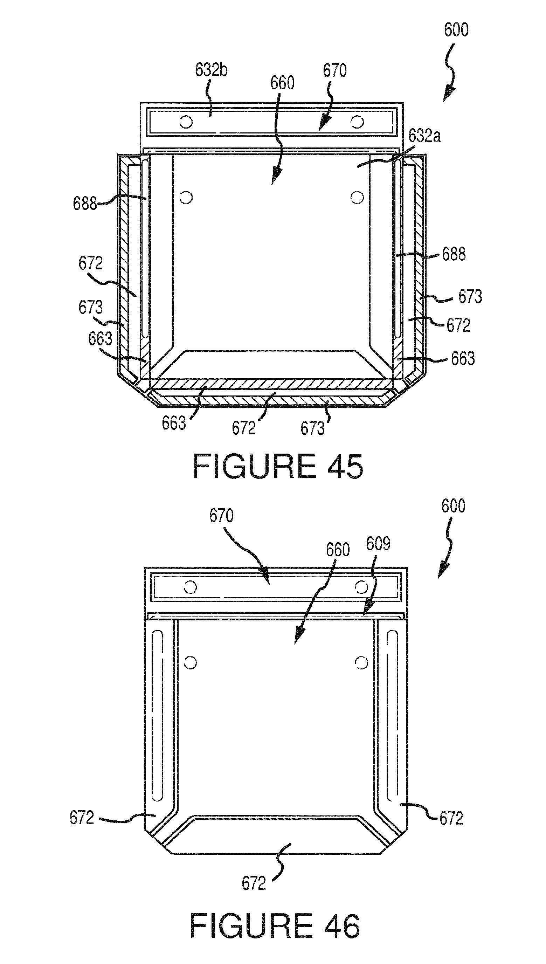

With reference to Figure 36, the side wings or flaps 572 may be approximately the same height as the first portion 560, and may generally be in the form of a triangle, or a wing, or an L-shape. In other examples, one or more of the side wings or flaps 572 may taper in width from a bottom portion to a top portion, or, with reference to figure 45, one or more side wings or flaps 672 may be generally rectangular in shape. In one example, each side wing 572 may extend approximately 8 centimeters or 3 inches from the substantially rectangular shaped area 571 of the second portion 570 at the side wing's 572 widest point 574, which may be somewhere between the top and bottom of the rectangular shaped area 571. Still with reference to Figure 36, the side wings 572 may taper out from their top to a mid-point 574, and then taper back in from the mid-point 574 to their bottom, thus forming an angle, thus forming an L-shaped, 90 degree angle. Of course, many different shapes and sizes of side wings 572 may be used (another example of which is described with reference to Figures 43 through 45). The size of the side wings 572 may determine the depth of the case 500 in some examples, with generally wider side wings 572 corresponding to a generally larger interior volume 509 of the case 500. Some cases 500 may include two side wings or flaps 572, which may be positioned on opposite sides of the first or second portions.

As described in more detail below, the side wings 572 may help secure the first portion 560 to the second portion 570 when they are thermally welded to the first portion 560. The side wings 572 help secure the first portion 560 to the second portion 570 by being folded to overlay the first portion 560and being at least partially thermally welded thereto. For example, each side wing or flap 572 may be folded over one of the respective edges 561, 562 of the first portion 560 and thermally welded to the outer surface 568 (or, alternatively, the inner surface) of the first portion 560, and may create a case 500 without a seam on the outer perimeter 568 of the case 500. By folding the side wings 572 over and thermal welding them to the first portion 560, the rounded, seamless sidewalls 504, 505 may provide a case 500 that does not catch or ravel easily.

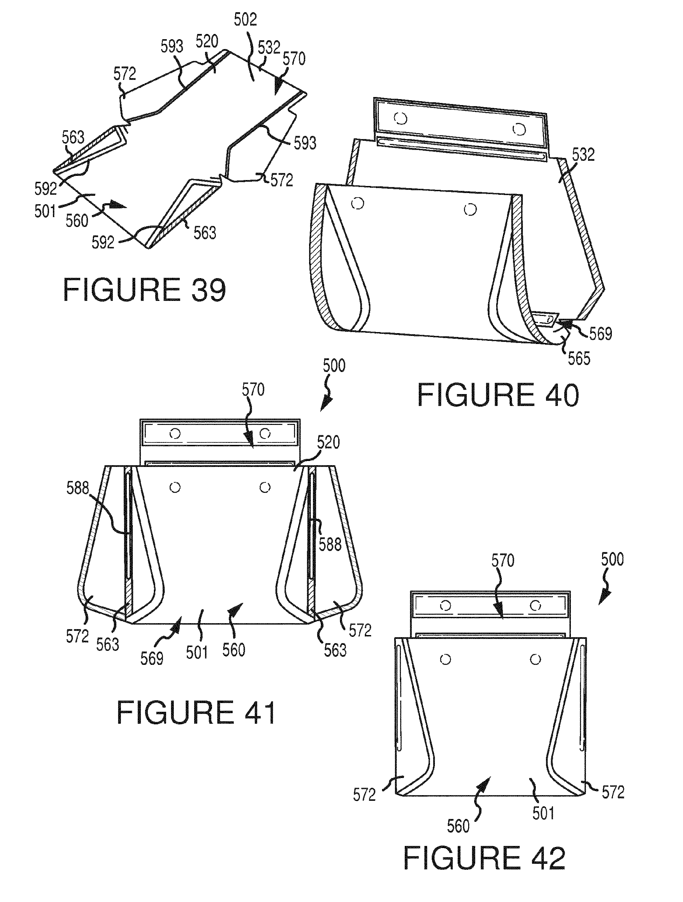

With reference to Figure 36, the sheet(s) of material(s) 520 may also include two tabs 565 at approximately the intersection or joint 569 between the first 560 and second 570 portions. As shown in Figure 36, two tabs 565 may be formed by making a small cut on each side of the first portion 560 near the intersection 569 with the second portion 570. For example, the cut may be a slit or aperture angled inwardly and upwardly from the intersection 569 of the first 560 and second 570 portions. Each cut or slit defines a tab 565 that can be folded in, as explained below. In other examples, the tabs 565 may be made by making a small cut on the second portion 570, or may be an extension of material from the first 560 or second 570 portions of the sheet of material 520. As explained in more detail below with reference to Figure 40, the tabs 565 in some examples may be tucked into the thermally welded case 500 during forming in order to allow shapes of cases 500 other than those having square corners at the bottom lateral edges of the case 500. When a sheet of material 520 is folded at square angles, an aperture or hole is formed at the bottom lateral corners of the case 500. The tabs 565, when folded and secured in place, at least partially cover these apertures and help secure the contents inside as well as create a finished look.

In some examples, the sheet of material 520 may include selectively-controlled expandable perforations, similar to those shown in Figures 30 through 34B. With reference to Figure 36, however, some examples may not include any selectively-controlled expandable perforations in the sheet of material 520. Even in those examples without selectively-controlled expandable perforations, the sheet of material 520 may be elastic (in its entirety, or only in select areas) in some cases, which may allow for at least a partial expandability of the case 500 when an object such as a laptop computer is positioned within the case. For example, the side wings 572 may include selectively-controlled expandable perforations in order to allow the depth of the case 500 to expand when an object such as a laptop is inserted (not shown). In other examples, other sections of the first 560 and/or second 570 portions may include selectively-controlled expandable perforations.

With continuing reference to Figure 36, several components may be positioned relative to the sheet of material 520, and as described below, may be thermally welded to the sheet of material 520. For example, two narrow, linear strips of adhesive 563 may be positioned on the bottom surface or side 567 of the first portion 560, and two narrow L-shaped strips of adhesive 573 may be positioned on the top surface or side 577 of the wings 572 of the second portion 570. More specifically, in some examples, two narrow, linear strips of adhesive 563 may be positioned at the right and left perimeters of the bottom surface or side 567 of the first portion 560, and the two narrow L-shaped strips of adhesive 573 may be positioned at the right and left perimeters of the respective wings 572 of the second portion 570. Each of the respective strips of adhesive 563, 573 is used to help thermally weld the first portion 560 to the second portion 570, along the side wings 572 for example.

Still with reference to Figure 36, two reinforcement members 580 may be positioned on the inner surface 566, 567 of the sheet of material 520. The reinforcement members may be positions along opposing lateral edges of the case 500 in some examples. For example, a first reinforcement member 580a may be positioned at the intersection 569 between the first 560 and second 570 portions of the sheet of material 520 at what will become the bottom wall of the case 500, and a second reinforcement member 580b may be positioned at the intersection 579 between the top flap 508 and the rectangular area 571 of the second portion 570 at what will become the top wall of the case 500. The reinforcement members 580 may include a shock absorbing material, such as foam. In one example, the reinforcement members 580 may include Poron® XRD™ foam, but many different types of foams and other types of reinforcement members 580 may be used in other examples.

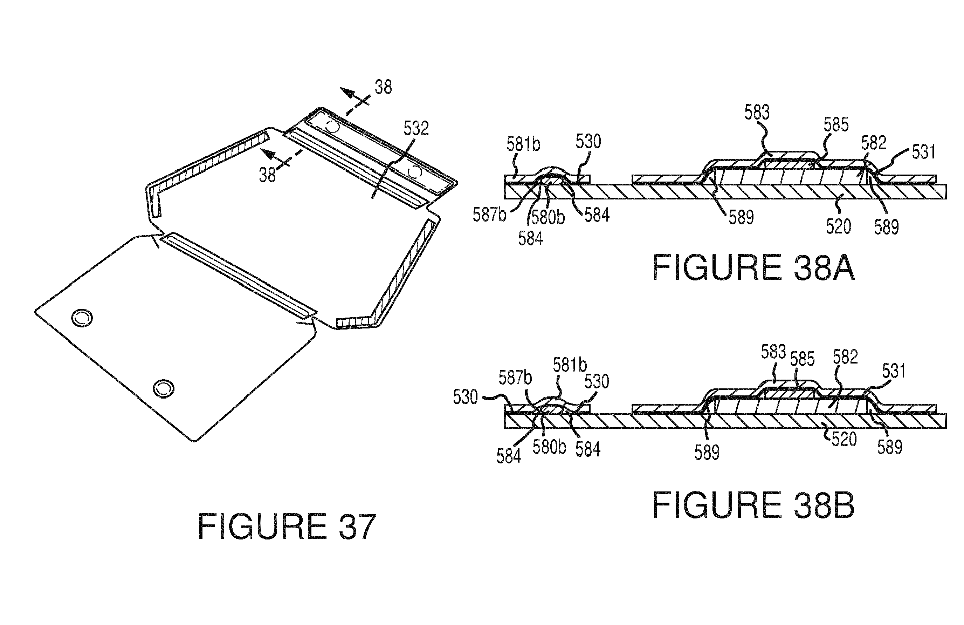

A first 581a and second 581b cover may be positioned over the respective first 580a and second 580b reinforcement members in order to secure the first 580a and second 580b reinforcement members to the sheet or sheets of material 520. The first 581a and second 581b covers may generally be both wider and taller than the respective first 580a and second 580b reinforcement members so that, as explained in more detail below with reference to Figure 38A or 38B, a single cover 581a, 581b (and in some examples, a single sheet of adhesive) may be used to secure the reinforcement member 580a, 580b to the sheet of material 520.

In some examples, and with reference to Figure 36, the first 581a and second 581b covers may be self-adhesive (e.g., may include a pre-applied adhesive on one side of the cover) so that no additional adhesive strips or sheets are needed. In other examples, however, a strip of adhesive (not shown) that is approximately the same size and shape as the cover 581a, 581b may be used. In either example, the cover 581a, 581b (and adhesive, if applicable) act to encase the respective reinforcement member 580a, 580b. As such, the cover 581a, 581b may be thermally welded to the sheet of material 520 around a perimeter of the reinforcement member 580a, 580b. In this manner, each cover 581a, 581b holds its respective reinforcement member 580a, 580b in place due to the thermal weld of the cover 581a, 581b with the sheet of material 520. As described below with reference to Figures 38A and 38B, the adhesive(s) may only secure the peripheral edges of the respective covers 581a, 581b such that the respective covers 581a, 581b create respective cavities or gaps 587a, 587b in which the respective reinforcement members 580a, 580b are positioned.

With reference still to Figure 36 a reinforcement board or sheet 582 may be coupled to the top flap 508 along either the inner or outer surface 576, 577 of the second portion 570 of the sheet of material 520. The reinforcement board 582 may be, for example, a polypropylene board, or any other suitable reinforcement member, including shapes other than boards. A corresponding cover 583 may also couple the reinforcement board 582 to the top flap 508 in a manner described below with reference to Figures 38A and 38B.

Additionally, one or more fasteners 585 may be thermally welded to the sheet of material 520. For example, two magnets 585 may be coupled to the inner 566 or outer 567 surfaces of the first portion 560 and two magnets may be coupled to the inner 566 or outer 567 surfaces of the top flap 508. In other embodiments, two magnets 585 may be coupled to the top flap 508, while a portion of metal may be coupled to the first portion 560, or vice versa. The magnets 585 may be coupled by one or more covers 586, which covers 586 may cover just the magnets 585, or may also cover a reinforcement board 582 for example.

In one example, with reference to Figure 36, two circular magnets 585 may be coupled to the inner surface 566 of the first portion 560 of the sheet of material 520 with two circular covers 586 (with the covers 586 having a generally larger diameter than the corresponding magnets 585). Two recesses 564 may be formed in the sheet of material 520 by boring or laser cutting, for example, in order to receive the magnets 585 in some embodiments (so that the magnetic force of the magnets 585 can more easily penetrate the sheet of material 520). For example, a recess may be formed in the sheet of material 520 to thin the material 520 along a portion configured to receive the magnets 585 such that the sheet of material 520 does not prohibitively interfere with the magnetic field while still preventing the magnets 585 to be easily noticeable in some examples. The magnets 585 may be positioned in the recesses, and their respective covers 586 (which may be self-adhesive) may be positioned over the magnets 585. In examples where the covers 586 are not self-adhesive, an additional circular portion of adhesive may be used to thermally weld the cover 586 to the sheet of material 520, and thereby secure the magnets 585. In some examples, a shield (not shown) may be placed behind the magnets 585 in order to shield any sensitive electrical equipment (e.g., a laptop) that is placed in the case 500 from the magnetic force of the magnets 585. The shield may be larger than the magnets 585 and may be coupled to the inner surface 566 of the first portion 560 with a thermally welded cover.

Similarly, two magnets 585 may be coupled to the top flap 508. With reference to Figure 36 and also to Figures 38A and 38B, two magnets 585 may be positioned in between the reinforcement board 582 and the cover 583 of the reinforcement board 582. As such, the cover 583 will secure the magnets 585 to the reinforcement board 582 by forming a thermal weld with the board 582 around the perimeter of the magnets 585, and the cover 583 will secure the board 582 to the sheet of material 520, as previously described.

Although some fasteners 585 have been described herein as magnets 585, it will be understood than many different types and numbers of magnets 585 or other fasteners 585 can be used. For example, circular or square magnets 585 may be used, and the magnets 585 may be laterally spaced in a line, may be spaced out of line, and so forth. In some examples, a single magnet 585 or a single set of magnets 585 may be used. Furthermore, different combinations of magnets 585 and materials responsive to magnets (e.g., metals) can be used to accomplish a similar effect, although using sets of two magnets 585 may provide greater magnetic force to secure the case 500. In those examples where at least one magnet 585 is used, the magnets 585 may act through the layer or layers of material 520 in order to selectively secure the case 500 - for example, in order to selectively secure the top flap 508 of the case 500 to the first portion 560 of the case 500. Magnets 585 or similar fasteners 585 may provide a sleek appearance as no outer buckles and/or latches may be needed in some examples.

With reference now to Figures 36 and 37, the sheet of material 520 in Figure 36 as well as the other components such as the fasteners 585, strips of adhesive 563, 573, reinforcement members 580a, 580b and boards 582, covers 581a, 581b, 583, etc. may be positioned relative to one another, then thermally welded together to form a laminate 532. A thermal press, such as those described above with reference to Figures 5A through 7G may be used to thermally weld the material(s) and components together.

In some examples, and with reference to Figures 36 and 37, the material and components may be thermally welded together in a single step. In these examples, an instrument such as a robotic arm (not shown) may position the material(s) and components with a great degree of precision onto a bottom platen 539, and a top platen 540 may be lowered to accomplish the thermal weld. In other examples, of course, multiple steps may be used to thermally weld individual or groups of components to the material, or to thermally weld one material to another material.

With reference to Figures 38A and 38B, also with reference back to Figures 27A and 27B, two examples of a section, taken along line 38-38 of Figure 37 will now be described. With reference to Figure 38A, in a first example, the adhesive 530 between the cover 581b and the reinforcement member 580b such as foam (whether the adhesive 530 be pre-applied to the cover 581b or is a separate sheet or portion of adhesive 530) may encompass the entire cross section of the reinforcement member 580b. In this manner, a continuous portion of adhesive 530 is wrapped around the reinforcement member 580b. The adhesive 530 may or may not adhere to the reinforcement member 580b, but due to the thermal weld of the cover 581b to the second portion 570 around the perimeter 584 of the reinforcement member 580b, the reinforcement member 580b is secured in place. In those examples where the adhesive 530 does adhere to the reinforcement member 580b, such adhesion provides additional strength to secure the reinforcement member 580b in place relative to the second portion 570.

Similarly, still with reference to Figure 38A, the adhesive 531 (whether the adhesive 531 is pre-applied to the cover 583 or is a separate sheet or portion of adhesive 531) between the cover 583 and the reinforcement board 582 and magnet 585 may encompass the entire cross section of the reinforcement board 582 and the magnet 585. In this manner, a continuous portion of adhesive 531 is wrapped around the reinforcement board 582 and the magnet 585. The adhesive 531 may or may not adhere to the reinforcement board 582 and/or to the magnet 585, but due to the thermal weld of the cover 583 to the second portion 570 around the perimeter 589 of the reinforcement board 582, the reinforcement board 582 and/or the magnet 585 may be secured in place. In some examples, the adhesive 531 may adhere to the reinforcement board 582 but not the magnet 585, or vice versa. In any of these examples, the thermal welding of the cover 583 to the second portion 570 may provide primary securement strength, and any adhesion of the adhesive 531 to the reinforcement board 582 and/or magnet 585 may provide additional securement strength.

With reference to Figure 38B, in a second example, the adhesive 530 between the cover 581b and the reinforcement member 580b such as foam (whether the adhesive 530 be pre-applied to the cover 581b or is a separate sheet or portion of adhesive 530) may not encompass the entire cross section of the reinforcement member 580b. In this manner, the reinforcement member 580b is secured in place due to the thermal weld of the cover 581b to the second portion 570 around the perimeter 584 of the reinforcement member 580b.

With reference to Figure 39, one example of the outer surfaces 567, 577 of the laminate 532 are shown, after being formed. The bottom surfaces or sides 567, 577 may include one or more strips of decorative tape 592, 593, which may be a polyurethane film in some examples. With reference to Figure 39, in some examples, the outer surface 567 of the first portion 560 of the sheet of material 520 may include mating L-shaped decorative tape 592 to correspond with the L-shaped wings 572. Similarly, the outer surface 577 of the second portion 570 of the sheet of material 520 may include matching L-shaped decorative tape 593 so that the case 500 is at least partially symmetrical from the front side 501 to the rear side 502 when complete. Also with reference to Figure 39, the two narrow, linear strips of adhesive 563 that were thermally welded to the bottom side 567 of the first portion 560 are shown positioned on the left and right edges of the outer surface 567 of the first portion 560, as described above with reference to Figure 36.

With reference to Figures 40-43, following the welding of the sheet of material 520 and components to form a laminate 532 (such as that shown in Figure 39), the laminate 532 may be formed into a case 500 in a series of one or more folding and attachment steps. Referring to Figure 40, the laminate 532 may be folded along the intersection 569 between the first 560 and second 570 portions of the sheet of material 520. In some examples, an object (not shown) may be placed between the first 560 and second 570 portions in order to approximate a laptop or other object in the finished case 500.

With reference to Figure 41, after the sheet of material 520 is folded along the intersection 569 between the first 560 and second 570 portions, two additional side reinforcement members 588 may be positioned along the narrow, linear strips of adhesive 563 proximate the left and right edges of the outer surface 567 of the first portion 560, or in other words along opposing lateral edges of the case 500. The side reinforcement members 588 may be a shock absorbing material, such as foam, and may generally have a smaller profile than the linear strips of adhesive 563 so that the adhesive 563 can surround and secure the reinforcement members 588 between the first portion 560 of the sheet of material 520 and the respective side wings 572. This may in some aspects be similar to the reinforcement members 580a, 580b and corresponding covers 581a, 581b described above with reference to Figures 38A and 38B in that the side wings 572 and the adhesive 563 encompass the entire cross section of the reinforcement members 588.

With reference now to Figure 42, after the reinforcement members 588, if any, are secured in place as shown in Figure 41, both of the side wings 572 of the second portion 570 may be folded over onto the first portion 560, and the tabs 565 may be tucked into the interior volume 509 of the case 560. Both the narrow, linear strips of adhesive 563 and the L-shaped strips of adhesive 573 may then be activated by a thermal welding process, such as those described above with reference to Figures 5A through 7G, to thermally weld the side wings 572 to the first portion 560, thereby creating a three dimensional thermally welded case 500 defining an interior volume 509.

Referring now to Figure 43, another example of a thermally welded case 600 is described. In general, the thermally welded case 600 shown in Figure 43 is similar to the case 500 shown in Figures 35 through 42, except that the case 600 in Figure 43 may be formed from two separate laminates 632a, 632b, which in turn are formed from two separate sheets 620a, 620b of material and may have different side wing 672 structures.

With reference to Figure 44, an exploded view of the sheets of material and components used in the thermally welded case 600 is shown and will now be described. A first sheet(s) of material(s) 620a may be generally rectangular in shape, and may include two tabs 665 extending from bottom left 621 and bottom right 622 corners of the first sheet of material 620a. Three narrow, linear strips of adhesive 663 may be positioned along the left 623, right 624, and bottom 625 perimeter edges of the first sheet of material 620a. Also, one or more fasteners 685, such as two circular magnets 685, may be positioned relative to the first sheet of material 620a, with covers 686 in some examples, as described above with reference to Figure 36. The narrow, linear strips of adhesive 663 and the fasteners 685 with covers 686 may be thermally welded to the first sheet of material 620a in order to form a first laminate 632a using any of the thermal welding techniques described above with reference to Figures 5A through 7G for example.

Still with reference to Figure 44, a second sheet(s) of material(s) 620b may include a generally, substantially rectangular area 671, a top flap 608 area, and three side wings 672 extending from left 625, right 626, and bottom 627 sides of the second sheet of material 620b. The left and right side wings 672 may be substantially rectangular in shape and may include a flat top 674 and an angled bottom 675, and the bottom side wing 672 may include an angled left side 676 and an angled right side 677. Strips of adhesive 673 may be positioned along the perimeters of each side wing 672. Similar to the case 500 shown and described with reference to Figures 35 to 42, the strips of adhesive 673 running along the perimeters of the side wings 672, reinforcement members 680a, 680b, a reinforcement board 682, fasteners 685, and appropriate covers 681a, 682b, 683, 686 may be positioned relative to the second sheet of material 620b, and all of these components may be thermally welded to the second sheet of material 620b in order to form a second laminate 632b using any of the thermal welding techniques described above with reference to Figures 5A through 7G for example.

With reference to Figures 45 and 46, the first laminate 632a may be positioned proximate the second laminate 632b, and in some embodiments an object (not shown) may be positioned between the first 632a and second 632b laminates with approximately the same volume as a laptop or other object that will be used in the case 600. The two tabs 665 extending from the first laminate 632a may be tucked in towards the interior volume 609 of the business case 600. A side reinforcement member 688 may be positioned along the narrow linear strip of adhesive 663 along each of the left and right edges of the first laminate 632a, or in other words along opposing lateral edges of the case 600. The three side wings 672 of the second laminate 632b may be folded to overlay the first laminate 632a, and the narrow, linear strips of adhesive 663 and the strips of adhesive 673 on the side wings 672 may be activated (by applying pressure and/or heat as described above with reference to Figures 5A through 7G for example) in order to thermally weld the side wings 672 of the second laminate 632b to the first laminate 632a, thereby creating a three dimensional thermally welded case 600 defining an interior volume 609 between the first and second laminates 632a, 632b.

The apparatuses and associated methods in accordance with the present disclosure have been described with reference to particular examples thereof in order to illustrate the principles of operation. The above description is thus by way of illustration and not by way of limitation. Various modifications and alterations to the described examples will be apparent to those skilled in the art in view of the teachings herein. Those skilled in the art may, for example, be able to devise numerous systems, arrangements and methods which, although not explicitly shown or described herein, embody the principles described and are thus within the spirit and scope of this disclosure. Accordingly, it is intended that all such alterations, variations, and modifications of the disclosed examples are within the scope of this disclosure as defined by the appended claims.

Where appropriate, common reference numbers and words are used for common structural and method features. However, unique reference numbers and words are sometimes used for similar or the same structural or method elements for descriptive purposes. As such, the use of common or different reference numbers or words for similar or the same structural or method elements is not intended to imply a similarity or difference beyond that described herein.

In methodologies directly or indirectly set forth herein, various steps and operations are described in one possible order of operation, but those skilled in the art will recognize that the steps and operations may be rearranged, replaced, or eliminated without necessarily departing from the spirit and scope of the disclosed examples. Steps or acts described in sequential order may be implemented before, after, sequentially or non-sequentially as may fit the particular description.

All relative and directional references (including: upper, lower, upward, downward, left, right, leftward, rightward, top, bottom, side, above, below, front, middle, back, vertical, horizontal, clockwise, counterclockwise, and so forth) are given by way of example to aid the reader's understanding of the particular examples described herein. They should not be read to be requirements or limitations, particularly as to the position, orientation, or use of the invention unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

In some instances, components are described with reference to "ends" having a particular characteristic and/or being connected with another part. However, those skilled in the art will recognize that the disclosed examples are not limited to components which terminate immediately beyond their points of connection with other parts. Thus, the term "end" should be interpreted broadly, in a manner that includes areas adjacent, rearward, forward of, or otherwise near the terminus of a particular element, link, component, part, member or the like.

## Claims

1. A case, comprising:
a plurality of layers of material thermally joined together in selected locations by thermally activated adhesive, the plurality of layers forming a laminate; and
the laminate formed from the plurality of layers defines a three dimensional object having a substantial interior volume.

2. A case, comprising:
a first portion having inner and outer surfaces, the first portion defined by a plurality of edges;
a second portion having inner and outer surfaces and at least one flap extending therefrom; and
wherein the at least one flap is folded to overlay the first portion and is at least partially thermally welded thereto to define at least a portion of an interior volume between the first and second portions.

3. The case of claim 2, wherein the at least one flap is folded over one of the plurality of edges of the first portion and at least partially thermally welded to the outer surface thereof.

4. The case of claims 2, wherein the at least one flap is folded over the second portion and at least partially thermally welded to the inner surface of the first portion.

5. The case of any of claims 2-4:
wherein the second portion includes a second flap; and
wherein the second flap is positioned near an adjacent edge of the first portion and thermally welded to the first portion.

6. The case of claim 4, wherein the at least one flap and the second flap are positioned on opposite sides of the second portion.

7. The case of any of claims 2-6, wherein the at least one flap is generally rectangular in shape, is generally triangular in shape, or tapers in width from a bottom portion to a top portion.

8. The case of any of claims 2-7, wherein:
the at least one flap defines an edge; and
the at least one flap is thermally welded to the first portion adjacent the edge of the first flap.

9. The case of any of claims 2-8, wherein the first portion and second portion are formed by a single sheet of material and joined together along an intersection about which the first portion is folded relative to the second portion.

10. The case of claims 9, wherein:
the first portion includes at least in part a substantially rectangular area; and
the second portion includes at least in part a substantially rectangular area.

11. The case of any of claims 2-10, further comprising at least two reinforcement members coupled to the first or second portion along opposing lateral edges of the case, wherein the reinforcement member is preferably a shock absorbing foam.

12. The case of any of claims 2-11, wherein the opposing lateral edges of the case define a case bottom intersection about which the first portion is folded relative to the second portion and a portion of a top flap configured to selectively at least partially enclose the interior volume.

13. The case of claim 12, wherein the top flap comprises a fastener to selectively attach to the first portion to hold the top flap in place.

14. The case of any of claims 2-13, wherein the opposing lateral edges of the case define enclosed sidewalls of the case.

15. The case of any of claims 2-14, further comprising:
a strip of adhesive positioned on the outer surface of the first portion along and adjacent one lateral edge of the case;
another strip of adhesive positioned on the inner surface of the second portion and located to connect with and extend along and adjacent the edge of the at least one flap.
wherein the strips of adhesive thermally weld the at least one flap of the second portion to the first portion.

16. The case of claims 15, wherein the first portion defines at least one tab proximate a joint between the first and second portions and configured to be folded inwardly towards the interior volume.

17. A case comprising:
a first panel portion including a first perforated layer of non-elastic material coupled to a first layer of elastic material by thermal welding;
a second panel portion including a second perforated layer of non-elastic material coupled to a second layer of elastic material by thermal welding; and
the top and bottom sides being thermally welded to form a selectively expandable interior volume.

18. A selectively expandable portion of a case, comprising:
a non-elastic material, the non-elastic material defining at least one aperture; and
an elastic material thermally welded to the non-elastic material proximate to and extending across said aperture and configured to allow expansion of the elastic material extending across the aperture upon a change in dimension of the aperture.
